**Europäisches Patentamt**

**European Patent Office**

**Office européen des brevets**

(19)

(11) Veröffentlichungsnummer: **0 012 396 B1**

(12) **EUROPÄISCHE PATENTSCHRIFT**

(45) Veröffentlichungstag der Patentschrift:
20.07.83

(51) Int. Cl.³: **G 01 N 27/26**, G 01 N 15/04, **G 01 P 5/00**

(21) Anmeldenummer: **79105008.1**

(22) Anmeldetag: **07.12.79**

(54) Vorrichtung zur spektroskopischen Bestimmung der Geschwindigkeit von in einer Flüssigkeit bewegten Teilchen.

(30) Priorität: **07.12.78 DE 2852978**

(43) Veröffentlichungstag der Anmeldung:
**25.06.80 Patentblatt 80/13**

(45) Bekanntmachung des Hinweises auf die Patenterteilung:
**20.07.83 Patentblatt 83/29**

(84) Benannte Vertragsstaaten:
**CH DE FR GB SE**

(56) Entgegenhaltungen:
**FR-A-2 086 385**
**US-A-3 552 855**
**US-A-4 097 153**

**OPTICS AND LASER TECHNOLOGY, Band 4, Nr. 6, Dezember 1972, GB Y.G. VASILENKO et al.: «Laser velocity meters – a comparative study», Seiten 270–272**

(73) Patentinhaber: **R & Z Biologicals GmbH & Co. KG, Heinrichstrasse 27, D-4050 Mönchengladbach 1 (DE)**

(72) Erfinder: **Steiner, Rudolf, Dr., Heinestrasse 15, D-4040 Neuss (DE)**
Erfinder: **Kaufmann, Raimund, Dr., Florastrasse 14, D-4005 Meerbusch-Büderich (DE)**

(74) Vertreter: **Thoenes, Dieter, Dr. et al, Patentanwälte Schaumburg, Schulz-Dörlam & Thoenes Mauerkircherstrasse 31, D-8000 München 80 (DE)**

# Vorrichtung zur spektroskopischen Bestimmung der Geschwindigkeit von in einer Flüssigkeit bewegten Teilchen

Die Erfindung betrifft eine Vorrichtung zur spektroskopischen Bestimmung der Geschwindigkeit von in einer Flüssigkeit bewegten Teilchen aus der Doppelverschiebung der Frequenz einer an den bewegten Teilchen gestreuten elektromagnetischen Welle, umfassend eine Strahlungsquelle zur Erzeugung einer im wesentlichen monochromatischen kohärenten elektromagnetischen Strahlung, eine Messzelle zur Aufnahme einer die Flüssigkeit mit den Teilchen umfassenden Probe, einen Strahlteiler zum Aufspalten der erzeugten Strahlung in einen die Messzelle durchdringenden Messstrahl und einen Referenzstrahl, Mittel zum Vereinigen des Referenzstrahls mit dem aus der Messzelle austretenden Messstrahl (im folgenden als Strahlmischer bezeichnet), eine Empfangsvorrichtung zum Empfang des gemischten Strahles und eine Auswertevorrichtung zur Verarbeitung der von der Empfangsvorrichtung erzeugten Signale.

Mit einem Laser als Strahlungsquelle dient eine derartige Vorrichtung zur Durchführung der sogenannten Laser-Doppler-Spektroskopie, welche ein Verfahren zur schnellen und objektiven Messung der Geschwindigkeit von Teilchen wie etwa Proteinen oder Zellen in einer Flüssigkeit ermöglicht. Dieses Messverfahren gewinnt beispielsweise im klinisch-diagnostischen Bereich zunehmend an Bedeutung, um beispielsweise die elektrophoretische Beweglichkeit von Erythrozyten und Leukozyten sowie ihre Sedimentationsgeschwindigkeit oder beispielsweise die Motilität von Spermien zu bestimmen.

Die äusserst geringfügige Dopplerverschiebung der Frequenz des eingestrahlten Messstrahles durch die bewegten streuenden Teilchen, wird dadurch ermittelt, dass durch Überlagerung des gestreuten Messstrahles mit dem Referenzstrahl ein heterodynes Signal erzeugt wird, dessen Schwebungsfrequenz dann ausgewertet werden kann. Bei schwach streuenden Teilchen kann beispielsweise das von der Glaswand der Messzelle ausgehende Streulicht als Referenzstrahl aufgenommen werden. Bei stark streuenden Teilchen muss dagegen ein definierter Referenzstrahl eingeführt werden, da das von der Glaswand der Messzelle ausgehende Streulicht nicht mehr ausreicht.

Eine Vorrichtung der eingangs beschriebenen Art ist beispielsweise aus einer Veröffentlichung von M. Dubois, Ann.phys.biol. et med., 1975, Bd. 9(1), S. 19–41, bekannt. Die bekannten Vorrichtungen der eingangs genannten Art haben den Nachteil, dass bei einer Verstellung des Messwinkels, d.h. des Winkels zwischen der Richtung des in die Messzelle einfallenden Messstrahles und der Richtung eines betrachteten gestreuten Teilstrahles jedesmal der Referenzstrahl nachgeführt und die optischen Komponenten nachjustiert werden müssen. Da oftmals eine winkelabhängige Messreihe erforderlich ist, um z.B. Informationen über die Art und Struktur der streuenden Teilchen zu erhalten, geht viel Zeit an Justagearbeit verloren.

Aus der französischen Patentanmeldung FR-A-2 086 385 ist ferner eine Messanordnung zur Messung der lokalen Geschwindigkeiten in einem strömenden Medium bekannt, bei der der von einem Laser ausgesandte Strahl mit Hilfe einer Sammellinse auf einen Punkt innerhalb einer von dem Medium durchströmten Leitung fokussiert wird. Das an den Teilchen des strömenden Mediums gestreute Licht und das ungestreut hindurchtretende Licht werden mit Hilfe einer zweiten Sammellinse parallel zur optischen Achse der beiden Sammellinsen gerichtet. Mit Hilfe einer schräg in den Strahlengang gestellten Platte mit planparallelen Grenzflächen wird das ungestreut hindurchtretende Laserlicht (Referenzstrahl) mit einem Teilstrahl (Messstrahl) aus dem gestreuten Laserlicht überlagert. Das Dopplersignal des überlagerten Strahles wird dann in der oben beschriebenen Weise ausgewertet. Um einen anderen Messstrahl zu erfassen, wird der Winkel der planparallelen Platte relativ zur optischen Achse verändert. Bei einer Drehung der im Stahlengang liegenden planparallelen Platte ändert sich aber nicht nur der Verlauf des Messstrahles, sondern auch der Verlauf des Referenzstrahles sowie der Verlauf des durch die Überlagerung von Referenzstrahl und Messstrahl gebildeten Strahles. Dies hat zur Folge, dass neben einer Drehung der planparallelen Platte auch die übrigen optischen Komponenten verstellt werden müssen. Den damit verbundenen Justageaufwand versucht man gemäss der französischen Patentanmeldung 2 086 385 dadurch zu verringern, dass die Verstellung der optischen Komponenten mechanisch gekoppelt wird. Dies erfordert jedoch einen erheblichen technischen Aufwand, um die erforderliche Genauigkeit bei einer derartigen gekoppelten Verstellung zu gewährleisten.

Ähnliche Probleme treten bei den Messanordnungen auf, wie sie in dem Artikel von Vasilenko aus «Optics and Laser Technology» Band 4, Nr. 6, Dezember 1972, Seiten 270 bis 272 beschrieben sind.

Der Erfindung liegt die Aufgabe zugrunde, eine Vorrichtung der eingangs genannten Art so auszubilden, dass der Referenzstrahl unabhängig vom Messwinkel stets zusammen mit dem aus der Messzelle austretenden Strahl auf den Empfänger fällt.

Zur Lösung dieser Aufgabe wird erfindungsgemäss vorgeschlagen, dass im Strahlengang zwischen Messzelle und Strahlmischer eine Sammellinse so angeordnet ist, dass ihr Brennpunkt innerhalb der Messzelle liegt, dass eine Blendeneinrichtung zum Ausblenden eines beliebigen mit dem Referenzstrahl zu vereinigenden Teilstrahles aus dem die Sammellinse verlassenden, parallel zur optischen Achse der Sammellinse gerichteten Strahlenbündel vorgesehen ist, dass die Blendeneinrichtung ein Strahlumlenkelement zur 90°-Ablenkung des von der Blendeneinrichtung erfassten Teilstrahles aufweist und dass die Sammellinse und die Messzelle einerseits und das Strahlumlenkelement anderseits senkrecht zur optischen Achse und parallel zu dem umgelenkten Teilstrahl relativ zueinander verstellbar sind.

Je nachdem, ob ein nahe der optischen Achse der Sammellinse oder an deren äusserem Rand austretender Teilstrahl von der Blendeneinrichtung ausgeblendet wird, werden unter einem kleinen Winkel gestreute Teilstrahlen oder unter einem grösseren Winkel gestreute Teilstrahlen erfasst. Eine Änderung des Messwinkels wird also allein dadurch erreicht, dass die Sammellinse und die Messzelle einerseits und das Strahleneintrittselement der Blendeneinrichtung anderseits senkrecht zur optischen Achse der Sammellinsen relativ zu einander verstellbar sind. Dagegen bleiben die übrigen Elemente der Vorrichtung, insbesondere die Strahlungsquelle, der Strahlteiler, der Strahlmischer und die Empfangsanordnung fest. Der Referenzstrahl braucht bei einer Änderung des Messwinkels nicht nachgeführt zu werden, da die Richtung des umgelenkten Teilstrahles unabhängig von der Stellung des Strahlumlenkelementes relativ zur Sammellinse stets gleichbleibt und immer an der gleichen Stelle auf den Strahlmischer trifft. Die lineare Verschiebung des Strahlumlenkelementes ist mit sehr grosser Genauigkeit durchführbar.

Die Blendeneinrichtung umfasst eine Lochblende, die vorzugsweise im Weg des umgelenkten Teilstrahles angeordnet ist, so dass auch sie bei einer Änderung des Messwinkels nicht bewegt zu werden braucht.

Um den Messstrahl auf ein möglichst kleines Streuvolumen in der Messzelle zu konzentrieren, ist im Strahlenweg zwischen dem Strahlteiler und der Messzelle eine zweite Sammellinse so angeordnet, dass ihr Brennpunkt in der Messzelle liegt. Unter Sammellinse wird hier ebenfalls wie bei der oben genannten Sammellinse stets ein optisches System mit den Eigenschaften einer Sammellinse verstanden. Dabei kann es sich sowohl um eine einzelne Linse als auch um ein aus mehreren Elementen bestehendes optisches System handeln.

Mit der Änderung des Messwinkels bzw. der Wahl eines unter einem anderen Winkel gestreuten Teilstrahles ändert sich die Lage des Streuvektors. Aus theoretischen Erwägungen ist es wünschenswert, dass der Streuvektor stets in die Bewegungsrichtung der Teilchen zeigt. Dies lässt sich auf einfache Weise dadurch erreichen, dass man bei einer Änderung des Messwinkels auch die Einfallsrichtung des in die Messzelle einfallenden Messstrahles ändert. Dies lässt sich bei der erfindungsgemässen Vorrichtung auf einfache Weise dadurch erreichen, dass im Strahlengang zwischen dem Strahlteiler und der zweiten Sammellinse eine zweite Blendeneinrichtung vorgesehen ist, wobei deren Strahlaustrittselement und die zweite Sammellinse relativ zueinander verstellbar sind. Es erfolgt dann auf der Strahleintrittsseite der Messzelle bei der Veränderung der Einfallsrichtung des Messstrahles in die Messzelle der inverse Vorgang wie bei der Auswahl des Messwinkels auf der Strahlaustrittsseite der Messzelle. Wenn der Einfallswinkel und der Messwinkel jeweils um den gleichen Betrag geändert werden, behält der Streuvektor stets die gleiche Richtung bei. Vorzugsweise sind die beiden Sammellinsen und die beiden Blendeneinrichtungen identisch ausgebildet und spiegelsymmetrisch bezüglich einer Mittelebene angeordnet, die senkrecht zu den optischen Achsen der Sammellinsen durch die Messzelle verläuft. Um dabei sicherzustellen, dass die beiden Winkel wirklich um den gleichen Betrag geändert werden, sind die Strahlenumlenkelemente der beiden Blendeneinrichtungen vorzugsweise über eine gemeinsame Verstelleinrichtung verstellbar. Diese kann beispielsweise einen Schlitten umfassen, auf dem die beiden Strahlumlenkelemente der Blendeneinrichtungen befestigt sind und der mittels eines Feintriebes senkrecht zur optischen Achse der beiden Sammellinsen verstellbar ist.

Die bisher beschriebene Anordnung ermöglicht die Messung der Geschwindigkeit von Teilchen, deren Bewegungsrichtung parallel zur Verstellrichtung der Strahlumlenkelemente relativ zu den Sammellinsen verläuft. Es ist jedoch häufig notwendig, in derselben Probe sowohl die elektrophoretische Beweglichkeit als auch die Sedimentationsgeschwindigkeit zu messen, wobei im ersteren Fall die Bewegungsrichtung horizontal und im zweiten Fall vertikal ist. Um mit ein und derselben Vorrichtung ohne grosse Umbauten oder Justierarbeiten sowohl Bewegungen in horizontaler als auch in vertikaler Richtung erfassen zu können, wird erfindungsgemäss vorgeschlagen, dass die Sammellinse und die Messzelle gemeinsam im wesentlichen senkrecht zu der ersten Verstellrichtung gegenüber den Blendeneinrichtungen verstellbar sind. Ist die Vorrichtung so aufgebaut, dass die erste Verstellrichtung horizontal verläuft, so werden die Blendeneinrichtungen so eingestellt, dass der in die Messzelle einfallende Messstrahl und der aus der Messzelle austretende erfasste Teilstrahl in einer die optischen Achsen der Sammellinsen enthaltenden vertikalen Ebene liegen. Dann ist der Streuvektor bei einer vertikalen Verstellung der Messzelle und der Sammellinsen stets vertikal gerichtet, so dass in diesem Falle also die Sedimentationsgeschwindigkeit der Teilchen gemessen werden kann.

Eine besonders einfache Lösung ergibt sich für eine zylindrisch ausgebildete Messzelle, deren Zylinderachse horizontal und senkrecht zu den optischen Achsen der Sammellinsen verläuft. Eine solche Messzelle kann beispielsweise von einer Glaskapillare gebildet sein, wobei jedoch darauf zu achten ist, dass der Aussenradius der Kapillare konstant ist. Wenn nun die Strahlumlenkelemente der Blendeneinrichtungen so gestellt werden, dass der Messstrahl die beiden Sammellinsen in der optischen Achse derselben durchläuft, so genügt es für die Erfassung verschiedener Streuwinkel unter Beibehaltung der Richtung des Streuvektors, die Messzelle in vertikaler Richtung zu verstellen. Wenn die Zylinderachse der Messzelle die optischen Achsen der Sammellinsen schneidet, trifft der Messstrahl radial auf die Messzelle auf und geht ungebrochen durch diese hindurch. Wird jedoch die Messzelle aus dieser Stellung in vertikaler Richtung nach oben oder unten verstellt, so trifft der Messstrahl nicht mehr senkrecht auf die Zellenaussenwand auf und wird daher gebrochen. Es hat sich nun überraschenderweise gezeigt, dass bei Konstanthaltung aller anderen Grössen der Streuwinkel der Auslenkung der Messzelle in vertikaler Richtung proportional ist, wobei diese Auslenkung von einer die Zylinderachse enthaltenden horizontalen Mittelebene aus gemessen wird. Diese Proportionalität gilt in guter Näherung bis zu einem Streuwinkel von etwa 20°. Mit einer derartigen Vorrichtung hat man also die Möglichkeit, allein durch eine lineare Verstellung der Messzelle einerseits bzw. der Strahlumlenkelemente anderseits vertikale Bewegungen bzw. horizontale Bewegungen der Teilchen zu erfassen, ohne dass der Aufbau der Vorrichtung geändert werden müsste.

Die vorstehend beschriebene Vorrichtung lässt sich ausserordentlich kompakt bauen und leicht bedienen, so dass eine grosse Anzahl von Messungen in kurzer Zeit durchgeführt werden kann. Insbesondere ist es ohne langwierige Justagearbeiten möglich, eine winkelabhängige Messreihe durchzuführen. Bei der vorstehend beschriebenen Vorrichtung kann man jedoch aufgrund der Eigenschaften der Sammellinsen nur einen Streuwinkel von maximal 60° erfassen. Oftmals ist es aber wünschenswert, auch bei grösseren Streuwinkeln zu messen, ohne dass dabei die den bekannten Vorrichtungen anhaftenden Nachteile in Kauf genommen werden müssen.

Zur Lösung dieser Aufgabe wird bei einer Vorrichtung der eingangs genannten Art erfindungsgemäss vorgeschlagen, dass der Strahlmischer und die Empfangsanordnung auf einem um eine durch die Messzelle verlaufende Schwenkachse schwenkbaren Schwenkträger angeordnet sind. Durch die Verschwenkung des Schwenkträgers können Streuwinkel bis annähernd 180° erfasst werden. Um auch hier sicherzustellen, dass die den Referenzstrahl führenden optischen Elemente nicht nachjustiert werden müssen, wenn der Schwenkträger verschwenkt wird, kann der Referenzstrahl beispielsweise auf mindestens einem Teil seines Weges über einen flexiblen Wellenleiter geführt sein. So kann der Referenzstrahl beispielsweise nach dem Austreten aus dem Strahlteiler in eine Monomode-Lichtleitfaser eingeblendet werden, deren Austrittsende gegenüber dem Strahlmischer fest angeordnet ist. So trifft der Referenzstrahl unabhängig von der Stellung des Schwenkträgers stets auf den gleichen Punkt am Strahlmischer auf und wird in dem Strahlmischer mit dem jeweils gewählten Teilstrahl vereinigt. Dabei kann auf bequeme Weise die Länge des Wellenleiters so gewählt werden, dass die Gesamtlänge des Referenzstrahles gleich der Länge des Messstrahles ist. Dies ist wesentlich, um bei einem Laser als Strahlungsquelle die Kohärenzlänge des Laserstrahles voll ausnützen zu können.

Gemäss einer anderen, bevorzugten Ausführungsform wird erfindungsgemäss vorgeschlagen, dass der Referenzstrahl und der Messstrahl beiderseits der Messzelle jeweils gemeinsam in einer die Schwenkachse enthaltenden Ebene verlaufen und dass im Schnittpunkt des Referenzstrahles mit der Schwenkachse ein Streuelement angeordnet ist, das den Referenzstrahl in einer zur Schwenkachse im wesentlichen senkrechten Ebene mindestens über den Schwenkbereich der Empfangsanordnung streut. In diesem Fall kann also auf dem Schwenkträger ein Strahlumlenkelement für den Referenzstrahl in einer festen räumlichen Beziehung zu dem Strahlmischer angeordnet werden. Wenn der Schwenkträger verschwenkt wird, wird nicht nur ein unter einem anderen Streuwinkel gestreuter Teil des Messstrahls, sondern auch ein unter dem gleichen Streuwinkel gestreuter Teil des Referenzstrahles erfasst und durch das Strahlumlenkelement stets auf den gleichen Punkt des Strahlmischers gelenkt. Selbstverständlich kann der Referenzstrahl auch direkt auf den Strahlmischer auffallen, während der Messstrahl von einem Strahlumlenkelement aufgenommen und zum Strahlmischer hin umgelenkt wird. Diese Lösung ist sogar vorzuziehen, weil sich auf diese Weise ohne Mühe exakt gleich lange Wege für den Referenzstrahl und den Messstrahl zwischen Strahlteiler und Strahlmischer herstellen lassen.

Als Streuelement kann eine koaxial zur Schwenkachse angeordnete zylindrische Glaskapillare oder die Spitze einer koaxial zur Schwenkachse angeordneten Nadel dienen. Wenn lediglich der Schwenkträger mit dem Strahlmischer und dem Empfänger verschwenkt wird, verändert sich mit dem Streuwinkel auch die Richtung des Streuvektors. Um diesen wiederum stets parallel zur Bewegungsrichtung der Teilchen zu halten, kann die Messzelle um die Schwenkachse drehbar angeordnet sein, wobei sie jeweils um die Hälfte des Winkels gedreht wird, um den der Schwenkträger verschwenkt wird.

Der Schwenkträger kann in Form einer Drehscheibe ausgebildet sein, die auf einem die Lichtquelle, den Strahlteiler und die Messzelle tragenden Tisch drehbar gelagert ist, wobei eine Winkelmessvorrichtung zur Bestimmung des Drehwinkels der Drehscheibe gegenüber dem Tisch vorgesehen ist. Gegebenenfalls kann die Messzelle ebenfalls drehbar gegenüber dem Tisch sein, wobei beispielsweise über ein entsprechendes Getriebe beim Drehen der Drehscheibe die Messzelle um den halben Drehwinkel mitgedreht wird.

Die Erfindung befasst sich ferner mit der Ausbildung und der Anordnung der Messzelle in einer Weise, dass sie ein rasches Austauschen von Proben ermöglicht, und sowohl die Messung der elektrophoretischen Beweglichkeit von Teilchen als auch ihrer Sedimentationsgeschwindigkeit ermöglicht.

Hierzu wird erfindungsgemäss vorgeschlagen, dass die Messzelle von einem beidendig offenen Rohr gebildet und in einem einen Durchtrittskanal für den Messstrahl aufweisenden Zellenhalter angeordnet ist, der in einem Gehäuse zwischen einer Füll- und Reinigungsstellung, in welcher die beiden Rohrenden mit einer Einfüll- und einer Auslauföffnung im Gehäuse fluchten, und einer Messstellung verstellbar ist, in welcher die Verbindung zwischen der Messzelle und der Aussenluft unterbrochen ist.

Vorzugsweise ist der Zellenhalter von einem zylindrischen Körper gebildet, der eine diametral verlaufende Durchbrechung zur Aufnahme der Messzelle und einen axial verlaufenden Durchtrittskanal für den Messstrahl aufweist, wobei das Gehäuse einen Block mit einer durchgehenden zylindrischen Aufnahmebohrung mit einem dem Aussendurchmesser des Zellenhalters entsprechenden Innendurchmesser aufweist und wobei die Einfüll- und die Auslauföffnung durch einander diametral gegenüberliegende Bohrungen in dem Block ausgebildet sind. Durch eine einfache Drehung des Zellenhalters können die offenen Rohrenden der Messzelle in Flucht mit der Einfüll- und der Auslauföffnung gebracht werden, wo dass die Zelle durchgespült und neu gefüllt werden kann. Ist die Messzelle wieder gefüllt, wird der Zellenhalter gedreht, so dass die Verbindung zwischen der Einfüll- und der Auslauföffnung und der rohrförmigen Messzelle unterbrochen ist. Zieht man den Zellenhalter aus seiner Aufnahmebohrung heraus, so kann auch die beispielsweise von einer Glaskapillare gebildete Messzelle auf einfache Weise ausgetauscht werden.

Diese Anordnung der Messzelle ermöglicht es auch auf einfache Weise, ein elektrisches Feld an die Probe anzulegen, um so die elektrophoretische Beweglichkeit der Teilchen zu messen. Hierzu wird vorgeschlagen, dass das Gehäuse beiderseits des Blockes und bezüglich der Achse der Aufnahmebohrung einander diametral gegenüberliegend jeweils eine Kammer zur Aufnahme einer Pufferlösung und einer Elektrode aufweist, dass die Aufnahmebohrung für den Zellenhalter mit den beiden Kammern über einander diametral gegenüberliegende Öffnungen in dem Block verbunden ist, die gegenüber der Einfüll- und der Auslauföffnung in Umfangsrichtung versetzt sind und dass die Öffnungen jeweils durch eine semipermeable Membran verschliessbar sind. In ihrer Messstellung fluchtet die Achse der fohrförmigen Messzelle mit der Verbindungslinie der beiden Öffnungen, so dass die semipermeablen Membranen an den offenen Rohrenden bzw. den Öffnungen der die Messzelle aufnehmenden Durchbrechung in dem Zellenhalter anliegen. Werden nun die in den Kammern befindlichen Elektroden an eine Spannungsquelle angeschlossen, so kann ein Strom durch die Pufferlösung, die Membranen und die Probe hindurchfliessen. Vorzugsweise sind die Elektroden an lösbar mit dem Gehäuse verbindbaren Elektrodenhaltern angeordnet, so dass die Elektroden mühelos ausgetauscht oder gereinigt werden können. Ein einfaches Anbringen und Lösen der Elektrodenhalter erreicht man beispielsweise dadurch, dass diese jeweils in eine die Gehäusewand durchsetzende Gewindebohrung einschraubbar sind und an ihrem kammerseitigen inneren Ende die jeweilige Elektrode tragen, die mit einer Anschlussklemme an einem ausserhalb der jeweiligen Kammer liegenden Abschnitt des jeweiligen Elektrodenhalters elektrisch leitend verbunden sind. Es versteht sich, dass das Gehäuse aus einem nicht leitenden Material, vorzugsweise einem Kunststoff hergestellt ist. Ein Problem besteht darin, die Membranen so anzuordnen, dass sie auf einfache Weise ausgetauscht werden können und dass dennoch eine Abdichtung zwischen den Kammern und der Aufnahmebohrung für den Zellenhalter erreicht wird. Hierzu ist an der der jeweiligen Kammer zugewandten Blockwand im Bereich der Öffnungen eine zylindrische Anlagefläche für die Membran ausgebildet, deren Mantellinien senkrecht zur Zylinderachse der Aufnahmebohrung verlaufen und welche die zylindrische Bohrungswand schneidet. Ferner ist jeweils ein teilzylindrisches Membranhaltestück mit einer der Anlagefläche angepassten zylindrischen Klemmfläche und einem mit der jeweiligen Öffnung fluchtenden Durchlasskanal vorgesehen, wobei das Membranhaltestück mittels einer Spannvorrichtung gegen die Anlagefläche anpressbar ist. Die Öffnungen in dem Block werden somit durch eine Verschneidung der zylindrischen Umfangsfläche der Aufnahmebohrung mit der zylindrischen Anlagefläche erzeugt. Dadurch lässt sich einerseits ein dichter Abschluss zwischen der jeweiligen Kammer zur Aufnahme der Pufferlösung und der Aufnahmebohrung erreichen, und gleichzeitig wird die Membran so gegen die Oberfläche des zylindrischen Zellenhalters gespannt, dass an der Öffnung der Durchbrechung zur Aufnahme der rohrförmigen Messzelle keine Probenflüssigkeit entweichen kann.

Die Spannvorrichtung umfasst vorzugsweise eine mit einem Innengewinde versehene Hülse und eine mit einer axialen Bohrung versehene, in das Innengewinde einschraubbare Hohlschraube, wobei sich die Spannvorrichtung einerseits an dem Membranhaltestück und anderseits an der der Anlagefläche gegenüberliegenden Kammerwand abstützt. Die Hülse und die Hohlschraube bilden in ihrem Inneren einen Kanal, durch den ein Strom hindurchfliessen kann.

Weitere Merkmale und Vorteile der Erfindung ergeben sich aus der folgenden Beschreibung, welche in Verbindung mit den beiliegenden Figuren die Erfindung anhand von Ausführungsbeispielen erläutert. Es zeigen:

Fig. 1 eine schematische Draufsicht auf eine Messvorrichtung gemäss einer ersten Ausführungsform der Erfindung,

Fig. 2 eine schematische Ansicht in Richtung des Pfeiles A in Fig. 1,

Fig. 3 eine teilweise geschnittene schematische Seitenansicht einer zweiten Ausführungsform der erfindungsgemässen Messvorrichtung,

Fig. 4 eine perspektivische schematische Darstellung des Strahlenverlaufs in der in Fig. 3 dargestellten Messvorrichtung,

Fig. 5 eine Schnittansicht durch eine Messzellenanordnung für die Messung der Geschwindigkeit von sich in einem elektrischen Feld bewegenden Teilchen,

Fig. 6 eine Draufsicht auf die in Fig. 5 dargestellte Messzellenanordnung,

Fig. 7 eine abgewandelte Ausführungsform der in Fig. 1 dargestellten Messvorrichtung und

Fig. 8 eine teilweise geschnittene Seitenansicht einer abgewandelten Ausführungsform der Messzellenanordnung.

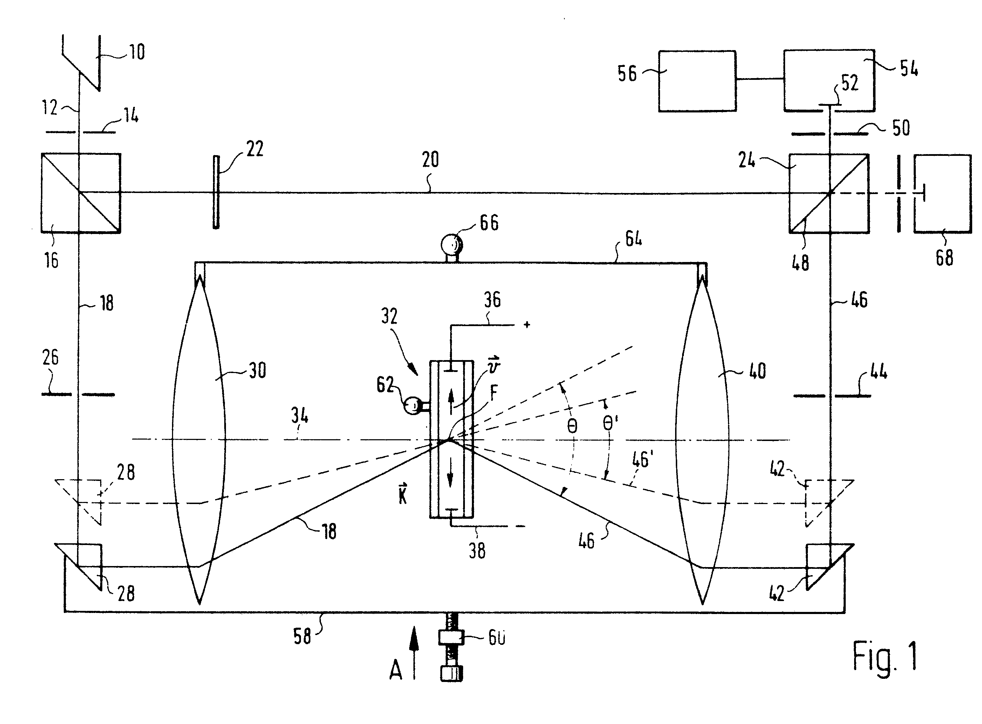

Die in Fig. 1 dargestellte Messanordnung umfasst einen Laser 10 als Strahlungsquelle zur Erzeugung einer monochromatischen kohärenten elektromagnetischen Strahlung. Der von dem Laser 10 ausgesandte ursprüngliche Lichtstrahl 12 gelangt über eine Lochblende 14 zu einem Strahlteiler 16, in dem er zu gleichen Teilen in einen Messstrahl 18 und einen Referenzstrahl 20 aufgespalten wird. Selbstverständlich kann jedoch auch die eingestrahlte Energie in anderer Weise auf den Messstrahl und den Referenzstrahl verteilt werden. Im dargestellten Beispiel ist der Strahlteiler 16 von zwei Halbwürfelprismen gebildet. Es kann aber auch jeder andere hierfür geeignete Strahlteiler verwendet werden.

Der Referenzstrahl gelangt über einen der Steuerung seiner Intensität dienenden drehbaren Polarisator 22 zu einem Strahlmischer 24, der in der gleichen Weise wie der Strahlteiler 16 ausgebildet ist.

Der Messstrahl 18 gelangt über eine Lochblende 26 zu einem als Strahlumlenkelement dienenden Halbwürfelprisma 28, welches den Messstrahl 18 um 90° zur Richtung des Ursprungsstrahles 12 umlenkt, so dass er parallel zur optischen Achse einer bikonvexen Sammellinse 30 auf diese auftrifft. Im Brennpunkt der Sammellinse 30 ist eine rohrförmige Messzelle 32 derart angeordnet, dass ihre Rohrachse senkrecht zur optischen Achse 34 der Sammellinse und parallel zur Richtung des ursprünglichen Laserstrahles 12 verläuft. Die Messzelle 32 enthält die Probenflüssigkeit mit den in der Probenflüssigkeit enthaltenen Teilchen, die sich unter der Wirkung einer an Elektroden 36 und 38 angelegten Spannung parallel zur Rohrachse bewegen.

Auf der der Linse 30 abgewandten Seite erkennt man eine Sammellinse 40, ein Halbwürfelprisma 42 und eine Lochblende 44, die identisch zu der Linse 30, dem Halbwürfelprisma 28 bzw. der Lochblende 26 ausgebildet und zu diesen Elementen bezüglich einer durch die Rohrachse der Messzelle 32 senkrecht zur Zeichenebene gelegten Ebene spiegelsymmetrisch angeordnet sind.

Der von dem Halbwürfelprisma 28 auf die Sammellinse 30 hingelenkte Messstrahl wird von der Sammellinse 30 zur optischen Achse 34 hin gebrochen und geht durch den gemeinsamen Brennpunkt F der beiden Sammellinsen 30 und 40. Der Messstrahl 18 wird an den sich in der Messzelle 32 bewegenden Teilchen gestreut, wobei die Frequenz des gestreuten Lichtes aufgrund der Bewegung der streuenden Teilchen durch den Doppler-Effekt verschoben ist. Die aus dem Streuvolumen um den Brennpunkt F herum austretenden und auf die Sammellinse 40 fallenden Streustrahlen 46 verlassen diese parallel zur optischen Achse 34. Die in das Halbwürfelprisma 42 fallenden Teilstrahlen des parallel zur optischen Achse aus der Linse 40 austretenden Strahlenbündels werden in dem Halbwürfelprisma 42 um 90° zur Lochblende 44 hin umgelenkt, welche einen Teilstrahl 46 so auf den Strahlmischer 24 fallen lässt, dass er zusammen mit dem an der Diagonalfläche 48 des Strahlmischers umgelenkten Referenzstrahl 20 durch eine Lochblende 50 hindurch auf die Photokathode 52 eines Detektors 54 fällt. Da sich der Referenzstrahl 20 und der gestreute Teilstrahl 46 in ihrer Frequenz geringfügig unterscheiden, empfängt der Detektor 54 ein Signal, dessen Amplitude mit einer Schwebungsfrequenz moduliert ist. Aus diesem Signal wird in bekannter Weise mit Hilfe einer nicht näher dargestellten Auswertevorrichtung 56 das Frequenzspektrum ermittelt, aus dem sich dann die Dopplerverschiebung der Frequenz und hieraus wiederum die Geschwindigkeit der bewegten Teilchen ermitteln lässt.

Das mit dem Strahl 18 in die Messzelle 32 eintretende Laserlicht wird an den bewegten Teilchen prinzipiell nach allen Seiten gestreut, wobei die Abstrahlung aber vorzugsweise in Vorwärtsrichtung erfolgt, wenn die Teilchen grösser als die Wellenlänge des eingestrahlten Laserlichtes sind. Zur Ermittlung der Dopplerverschiebung der Frequenz des in die Messzelle 32 einfallenden Laserstrahles bei der Streuung an den bewegten Teilchen ist die Kenntnis des Streuwinkels und des Streuvektors erforderlich. Der Streuwinkel $\theta$ ist der Winkel zwischen der Richtung des einfallenden Strahles und der Richtung des jeweils betrachteten gestreuten Teilstrahles, d.h. der Winkel zwischen der Richtung des einfallenden Strahles und der Richtung, unter dem das Streuvolumen relativ zum eintretenden Strahl betrachtet wird. Der Streuwinkel stellt also auch den Messwinkel dar. In Fig. 1 ist der Streuwinkel $\theta$ zwischen der Richtung des Messstrahls 18 und des ausgewählten gestreuten Teilstrahles 46 eingezeichnet.

Der Streuvektor $\bar{K}$ ergibt sich aus der Differenz des Wellenvektors der eintretenden Welle und des Wellenvektors der gestreuten Welle. Aus Gründen, auf die später noch näher eingegangen wird, verläuft der Streuvektor $\bar{K}$ bei der Anordnung in Fig. 1 in Richtung der Rohrachse der Messzelle 32.

Wenn nun eine winkelabhängige Messreihe durchgeführt werden soll, d.h. gestreute Teilstrahlen mit verschiedenen Streuwinkeln betrachtet werden sollen, so kann dies mit der erfindungsgemässen Anordnung auf sehr einfache Weise erreicht werden, indem das Prisma 42 in Richtung auf den Strahlmischer 24 verstellt wird. Wird das Prisma 42 aus der in Fig. 1 durch ausgezogene Linien wiedergegebenen Stellung in die gestrichelt eingezeichnete Stellung verschoben, so wird ein Teilstrahl 46' mit einem kleineren Streuwinkel

θ' erfasst. Dabei ändert sich die Richtung und Lage des aus dem Prisma 42 austretenden Messstrahles nicht, so dass dieser unabhngig von der Stellung des Prismas 42 stets auf dieselbe Stelle in dem Strahlmischer 24 fllt. Somit trifft der Messstrahl stets mit dem Referenzstrahl 20 in dem Strahlmischer 24 zusammen, ohne dass bei der Wahl eines anderen Streuwinkels der Referenzstrahl nachgestellt werden msste. Das Prisma 42 und die Blende 44 stellen somit eine Blendeneinrichtung dar, welche es ermglicht, aus dem auf die Linse 40 einfallenden Bndel von Streustrahlen sich einen beliebigen Teilstrahl mit dem gewnschten Streuwinkel auszublenden.

Wie man in Fig. 1 erkennt, ist auch das Prisma 28, welches den einfallenden Messstrahl 18 auf die Linse 30 lenkt, in Richtung des ursprünglichen Laserstrahles 12 verstellbar. Und zwar sind beide Prismen 28 und 42 gemeinsam auf einem Schlitten 58 befestigt, der mittels eines schematisch angedeuteten geeichten Feintriebes 60 verstellt werden kann. Dadurch werden die Prismen 28 und 42 stets genau um die gleiche Strecke verstellt, wie dies aus den gestrichelt eingezeichneten Stellungen der Prismen 28 und 42 erkennbar ist. Durch diese symmetrische Anordnung und Verstellung der Prismen 28 und 42 sowie der Linsen 30 und 40 wird erreicht, dass der Streuvektor $\vec{K}$ stets in Richtung der Rohrachse der Messzelle 32 zeigt und damit stets parallel zum Vektor $\vec{v}$ ist, welcher die Geschwindigkeit der Teilchen in der Messzelle 32 angibt. Würde man den Messstrahl 18 stets in der gleichen Richtung in die Messzelle 32 einfallen lassen, so würde bei einer Änderung des Streuwinkels θ der Streuvektor seine Richtung um den Betrag θ/2 ändern.

Es ist also noch einmal festzuhalten, dass der Laser 10, der Strahlteiler 16, der Strahlmischer 24 und der Detektor 54, die Messzelle 32 und die Linsen 30 und 40 fest montiert bleiben und dass bei einer Änderung des Streuwinkels nur der Schlitten 58 mit den Prismen 28 und 42 verfahren wird. Um also eine winkelabhängige Messreihe durchzuführen, genügt es, den Schlitten 58 mittels des geeichten Feintriebes 60 um eine einer bestimmten Winkeländerung entsprechende Strecke zu verstellen. Eine Änderung des Verlaufes des Referenzstrahles und damit ein Nachjustieren der den Referenzstrahl führenden optischen Elemente ist nicht notwendig. Dies verkürzt die Messzeiten ausserordentlich.

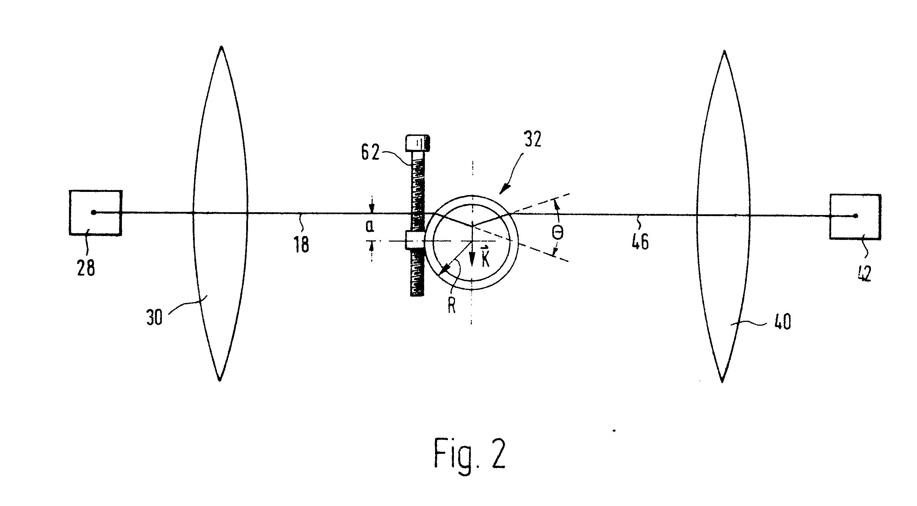

Mit der Anordnung in Fig. 1 können Bewegungen von Teilchen in horizontaler Richtung gemessen werden, wie dies beispielsweise bei der Messung der elektrophoretischen Beweglichkeit der Teilchen erforderlich ist. Die erfindungsgemässe Anordnung bietet jedoch auch die Möglichkeit, ohne Veränderung des Aufbaues der Anordnung die Sedimentationsgeschwindigkeit der Teilchen messen zu können, d.h. die Geschwindigkeit, mit der sich die Teilchen aufgrund der Schwerkraft in der Probenflüssigkeit bewegen. So kann beispielsweise die Blutsenkungsgeschwindigkeit bestimmt werden, die ein klinisch wesentlicher Parameter ist. Um eine winkelabhängige Messung einer vertikalen Geschwindigkeit durchführen zu können, werden die Prismen 28 und 42 so verstellt, dass der aus dem Prisma 28 austretende und der in das Prisma 42 eintretende Strahl längs der optischen Achse der beiden Linsen 30 und 40 verlaufen. Um nun zu erreichen, dass der Streuvektor vertikal gerichtet ist und um den Streuwinkel zu verändern, wird die zylindrische Messzelle, deren Achse bei der in Fig. 1 dargestellten Anordnung in der die optische Achse der Linsen 30 und 40 enthaltenden Ebene liegt, gemäss Fig. 2 in vertikaler Richtung verschoben. Dadurch tritt der Messstrahl 18 nicht mehr ungebrochen durch die zylindrische Messzelle hindurch, sondern es ergibt sich der in Fig. 2 dargestellte Strahlenverlauf. Wird mit a die vertikale Auslenkung der Messzelle aus ihrer ursprünglichen Lage, mit R der Aussenradius der Messzelle und mit n der Brechungsindex der Glaswand der Messzelle bezeichnet, wobei angenommen wird, dass der Brechungsindex der Glaswand etwa gleich dem Brechungsindex der Probenflüssigkeit ist, so ergibt sich in guter Näherung

$$\sin \frac{\theta}{2} \approx \frac{a}{R}\left(\frac{n-1}{n}\right)\left(1 + \frac{a^2}{2\,n\,R^2}\right)$$

Daraus ergibt sich, dass bis etwa zu einem Winkel θ von 20° der Streuwinkel θ proportional der Auslenkung a ist. Bei der erfindungsgemässen Anordnung ist daher die Messzelle 32 auf einer nicht dargestellten Halterung vertikal verschiebbar angeordnet und kann mit Hilfe eines geeichten schematisch angedeuteten Feintriebes 62 in vertikaler Richtung verstellt werden. Voraussetzung für diese Art der Messung ist allerdings, dass der Aussenradius R der Messzelle überall konstant ist.

Wird anstatt einer zylindrischen Messzelle 32 eine Cuvette mit planparallelen Flächen verwendet, so lässt sich ein vertikal gerichteter Streuvektor dadurch erreichen, dass die Linsen 30 und 40 sowie die Messzelle gemeinsam in vertikaler Richtung verstellbar sind. Hierzu sind die Linsen 30 und 40 sowie die Halterung für die Messzelle auf einer gemeinsamen, in Fig. 1 schematisch angedeuteten Führung 64 angeordnet, die mittels eines Feintriebes 66 in vertikaler Richtung verstellbar ist. In Fig. 1 ist ein rechtwinklig zu dem Detektor 54 noch ein zweiter Detektor 68 angeordnet, wobei die beiden Detektoren 54 und 68 parallel betrieben werden können oder durch Vorschalten von um 90° versetzten Polarisatoren gleichzeitig die Komponenten des polarisierten und depolarisierten Streulichtes analysieren können. Eine derartige Anordnung ist wichtig für die Messung anisotroper Moleküle oder Teilchen.

Der wesentliche Vorteil der vorstehend beschriebenen Anordnung liegt also darin, dass eine Änderung des Messwinkels allein durch eine lineare Verschiebung der Prismen 28 und 42 bzw. eine lineare Verschiebung der Messzelle 32 erreicht wird. Alle übrigen Elemente bleiben jeweils fest montiert und justiert. Man benötigt kein Goniometer. Allerdings kann bei der Vorrichtung ein

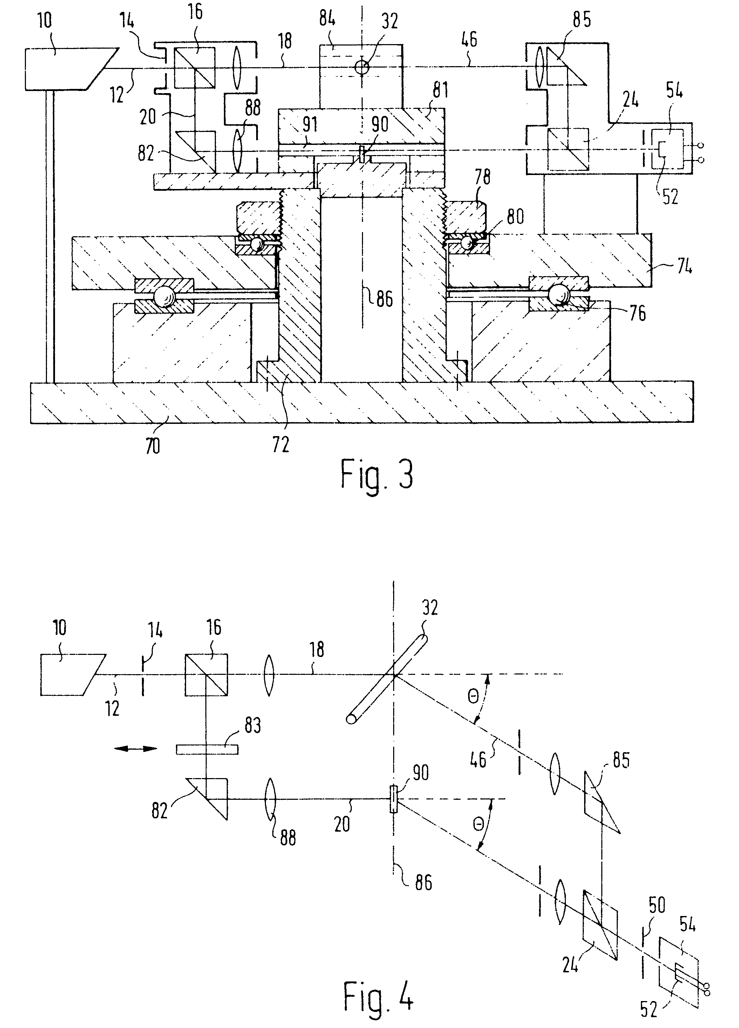

Streuwinkel Θ von maximal 60° erfasst werden. Eine Vorrichtung, welche auch das Messen bei grösseren Streuwinkeln ermöglicht, soll nun anhand der Fig. 3 und 4 beschrieben werden.

In Fig. 3 erkennt man einen Tisch 70 mit einer auf dem Tisch festgeschraubten Mittelsäule 72. Auf dem Tisch 70 ist koaxial zu der Mittelsäule 72 eine Drehscheibe 74 über Kugellager 76 drehbar gelagert. Die Drehscheibe 74 wird in axialer Richtung auf der Mittelsäule 72 durch eine auf das freie Ende der Mittelsäule 72 aufgeschraubte Mutter 78 gehalten, wobei zwischen Mutter 78 und Drehscheibe 74 ein weiteres Kugellager 80 angeordnet ist.

Bei dieser Anordnung sind der Laser 10, die Blende 14, der Strahlteiler 16 und ein Umlenkprisma 82 für den Referenzstrahl 20 fest auf dem Tisch 70 montiert. Auf dem oberen Ende der Säule 72 befindet sich eine allgemein mit 84 bezeichnete Messzellenanordnung mit der Messzelle 32. Die Messzelle ist von einem dünnen Glasröhrchen gebildet, dessen Rohrachse senkrecht zur Drehachse 86 der Drehscheibe 74 verläuft und die Drehachse 86 schneidet.

Auf der Drehscheibe 74 sind der Detektor 54, der Strahlmischer 24 und ein Umlenkprisma 85 für den gestreuten Messstrahl 46 angeordnet. Der Detektor kann damit zusammen mit dem Strahlmischer auf der Drehscheibe 74 um die Drehachse 86 verschwenkt werden, um Streustrahlen mit unterschiedlichen Streuwinkeln aufzufangen. Bei derartigen Anordnungen musste bisher bei einer Änderung des Messwinkels der Referenzstrahl nachgeführt werden, d.h. es mussten die zur Führung des Referenzstrahls dienenden optischen Bauteile nachjustiert werden. Dies wird nun bei der erfindungsgemässen Anordnung dadurch vermieden, dass der Referenzstrahl von dem Strahlteiler 16 ausgehend über das Prisma 82 über eine Linse 88 auf eine Glaskapillare 90 fokussiert wird, die koaxial zur Drehachse 86 angeordnet ist und an welcher der Referenzstrahl gestreut wird. Der Referenzstrahl verläuft dabei in einem Schlitz 91, der sich horizontal von aussen über die halbe Querschnittsfläche der Säule 72 erstreckt. Wie man insbesondere aus Fig. 4 erkennt, liegen der Messstrahl 18 und der Referenzstrahl 20 auf der Strahleneintrittsseite der Messzelle 32 in einer vertikalen Ebene, welche die Drehachse 86 enthält. Ebenso liegen der gestreute Strahl 46 und der Referenzstrahl 20 auf der Austrittsseite der Messzelle 32 in einer die Drehachse 86 enthaltenden vertikalen Ebene, die jedoch gegenüber der erstgenannten Ebene um den Streuwinkel θ verschwenkt ist. Die beiden Ebenen schneiden sich also in der Drehachse 86. Da die Streuung des Referenzstrahles in dem Schnittpunkt des Referenzstrahles mit der Drehachse 86 erfolgt, wird bei der Drehung der Drehscheibe 74 unabhängig von dem erreichten Winkel θ stets ein gestreuter Teilstrahl des Referenzstrahles von dem Strahlmischer 24 erfasst. Das heisst, es braucht keines der den Referenzstrahl führenden optischen Elemente nachjustiert zu werden, wenn die Drehscheibe 74 gedreht wird. Der Referenzstrahl und der jeweils erfasste gestreute Messstrahl fallen unabhängig von dem gewählten Winkel θ stets auf den gleichen Punkt des Strahlmischers 24 und von dort mit von der Winkelstellung der Drehscheibe unabhängiger Strahlrichtung in den Detektor 54. Man erkennt, dass man mit dieser Anordnung auch mühelos Streuwinkel von mehr als 90° erfassen kann.

Wenn man bei dieser Anordnung erreichen will, dass der Streuvektor $\bar{K}$ stets parallel zur Bewegungsrichtung der Teilchen ist, muss die Messzelle bei einer Drehung der Drehscheibe um den Winkel θ um θ/2 mitgedreht werden. Dies lässt sich ohne Mühe durch ein entsprechendes Übersetzungsgetriebe zwischen der Drehscheibe und einer Halterung für die Messzellenanordnung 84 erreichen. Zwei senkrecht zueinander verstellbare Schlitten 81 ermöglichen eine Justierung der Messzellenanordnung 84 auf der Säule.

Der wesentliche Vorteil der Anordnung gemäss den Fig. 3 und 4 liegt darin, dass sich durch die dargestellte Anordnung von rechtwinkligen Umlenkprismen 82 und 85 sowie dem Strahlteiler 16 und dem Strahlmischer 24 exakt gleiche Wege für den Messstrahl und den Referenzstrahl ergeben. Damit lässt sich die Kohärenzlänge des Laserstrahles optimal ausnutzen. Dies ist beispielsweise bei der Anordnung gemäss den Fig. 1 und 2 nicht der Fall. Jedoch kann diese Anordnung so kompakt gebaut werden, dass der Wegunterschied zwischen dem Messstrahl und dem Referenzstrahl relativ gering ist und bei einer Kohärenzlänge des Laserstrahles von einigen Metern keine ernsthaften Schwierigkeiten verursacht.

Es ist noch zu bemerken, dass im Weg zwischen dem Strahlteiler 16 und dem Umlenkprisma 82 ein verstellbares Graufilter 83 angeordnet ist, um die Intensität des Referenzstrahles variieren zu können.

Anstatt den Referenzstrahl über die Kapillare 90 zu führen, könnte der Referenzstrahl auch mittels einer nicht dargestellten Optik in eine Monomode-Lichtleitfaser eingeblendet werden, deren Austrittsende am Strahlmischer 24 angeordnet ist. Wegen der Flexibilität der Lichtleitfaser kann dann ebenfalls die Drehscheibe 74 verstellt werden, ohne dass ein Nachführen des Referenzstrahles notwendig ist. Mit der Lichtleitfaser lassen sich die Weglängen von Referenzstrahl und Messstrahl auch bequem auf den exakt gleichen Wert einstellen.

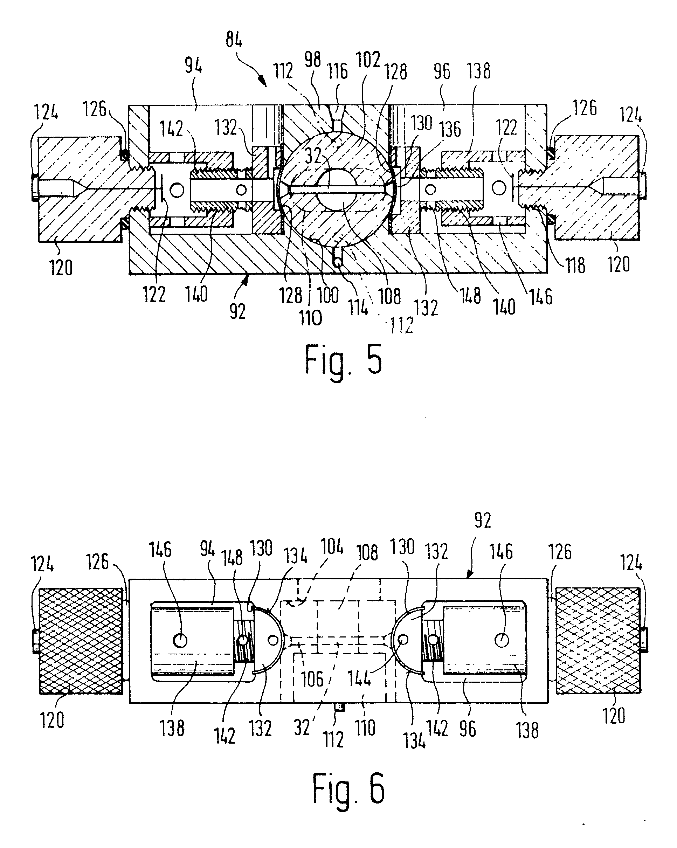

In den Fig. 1 bis 4 wurde bisher die Messzelle stets schematisch als Röhrchen dargestellt. Anhand der Fig. 5 und 6 wird nun eine Anordnung zur Halterung der Messzelle beschrieben, mit der auf bequeme Weise die elektrophoretische Wanderungsgeschwindigkeit von Teilchen in der Messzelle gemessen werden kann und die ein rasches und bequemes Auswechseln der Proben ermöglicht.

In den Fig. 5 und 6 erkennt man ein im wesentlichen quaderförmiges Gehäuse 92 mit zwei nach oben hin offenen Kammern 94 und 96, die durch einen Block 98 voneinander getrennt sind. Der Block 98 weist eine zylindrische Aufnahmebohrung 100 zur Aufnahme eines zylindrischen Zellenhalters 102 auf. Die Aufnahmebohrung 110 erstreckt sich durch den gesamten Block 98, weist aber eine Schulter 104 zur Anlage eines Stirnendes des Zellenhalters 102 auf, so dass dieser in axialer Richtung der Aufnahmebohrung 104 exakt positioniert werden kann.

Der Zellenhalter 102 besitzt eine senkrecht zu seiner Zylinderachse durch diese verlaufende Radialbohrung 106, die zur Aufnahme der von einer Glaskapillare gebildeten Messzelle 32 dient. Die Innenabmessungen der Radialbohrung 106 sind geringfügig kleiner als der Aussendurchmesser der Messzelle. An ihren radial äusseren Enden ist die Bohrung 106 konisch aufgeweitet. Der Zellenhalter 102 weist ferner eine axiale Durchbrechung auf, die aus einer zylindrischen Bohrung 108 und einer diese Bohrung fortsetzenden Langlochausfräsung 110 besteht. Die Bohrung 108 ist dem einfallenden Messstrahl zugewandt, während die Langlochausfräsung 110 auf der Austrittsseite der gestreuten Messstrahlen liegt. Durch die Langlochausfräsung wird der Öffnungswinkel und damit der mögliche Messbereich vergrössert, der ohne Verstellung des Gehäuses 92 abtastbar ist. An der nach aussen weisenden Stirnfläche des Zellenhalters 102 sind zwei einander diametral gegenüberliegende Zapfen 112 angeordnet, an denen ein Schlüssel angesetzt werden kann, um den Zellenhalter in der Aufnahmebohrung 100 drehen zu können. Durch die Drehung des Zellenhalters 102 in der Aufnahmebohrung 100 kann die Messzelle 32 in ihrer vertikalen Stellung in Flucht mit einem unten gelegenen Einlasskanal 114 und einem oben gelegenen Auslasskanal 116 in den Block 98 gebracht werden. Die beiden Kanäle 114 und 116 sind nach aussen hin konisch erweitert, so dass man eine Spritze zum Einfüllen der Probenflüssigkeit ansetzen kann.

Soll die Messzelle 32 ausgetauscht werden, so kann der Zellenhalter 102 aus der Aufnahmebohrung 100 herausgedrückt werden.

An den dem Block 98 fernen Wänden des Gehäuses 92 ist jeweils eine Gewindebohrung 118 ausgebildet, deren Achse durch die Messzelle 32 verläuft, wenn diese mit dem Zellenhalter 102 in ihre horizontale Richtung gedreht ist. In diese Gewindebohrungen 118 können Elektrodenhalter 120 eingeschraubt werden, die an ihrem inneren Ende jeweils eine Elektrode 122 tragen. Der Elektrodenhalter 120 ist von einem zylindrischen, auf seiner Aussenumfangsfläche gerändelten Knopf gebildet, an dessen der Elektrode 122 ferner äusserer Stirnwand eine Steckbuchse 124 angeordnet ist, die durch den Elektrodenhalter 120 hindurch mit der Elektrode 122 elektrisch leitend verbunden ist. Beim Einschrauben des Elektrodenhalters 120 in die Gewindebohrung 118 wird zwischen die Gehäusewand und den Elektrodenhalter 120 eine Ringdichtung 126 eingelegt, um ein Austreten von Pufferflüssigkeit aus den Kammern 94 und 96 zu verhindern.

Wie man in Fig. 6 erkennt, ist die dem Block 98 nahe Wand der Kammern 94 und 96 zylindrisch gekrümmt mit senkrecht zur Achse der Aufnahmebohrung 100 verlaufender Zylinderachse. Dabei ist diese zylindrische Fläche so angeordnet, dass sie die zylindrische Aufnahmebohrung schneidet. Dadurch entstehen zwei einander diametral gegenüberliegende Öffnungen 128, welche eine Verbindung zwischen den Kammern 94 und 96 und der Aufnahmebohrung 100 herstellen und damit die Möglichkeit einer Verbindung zwischen der Messzelle 32 und den Kammern 94 und 96 schaffen.

Die Öffnungen 128 sind durch Dialysemembranen 130 abgedichtet, die mit Membranhaltestücken 132 gegen die von der halbzylindrischen Kammerwand gebildete Anlagefläche 134 gedrückt werden. Diese Membranhaltestücke 132 sind auf ihrer zur Anlage an der Membran 130 bestimmten Seite ebenfalls zylindrisch gekrümmt mit einem der Krümmung der Anlagefläche 134 angepassten Radius. Im Bereich der Öffnung 128 weisen die Membranhaltestücke eine Aussparung 136 auf, in welche der Zellenhalter 102 hineinragt (vgl. Fig. 5). Als Membranen können z.B. herkömmliche Dialysemembranen verwendet werden.

Die Membranhaltestücke 132 werden mit Hilfe einer Spannvorrichtung gegen die Anlagefläche 134 gepresst. Diese Spannvorrichtung umfasst eine Hülse 138, die mit ihrem offenen Ende an der dem Block 98 fernen Wand des Gehäuses koaxial zu der Gewindebohrung 118 befestigt ist und an ihrem geschlossenen Ende koaxial zu ihrer Längsachse eine Gewindebohrung 140 aufweist, in welche eine Hohlschraube 142 einschraubbar ist. Wie in Fig. 5 dargestellt ist, kann man durch das Herausschrauben der Hohlschraube 142 aus der Hülse 138 das Membranhaltestück 132 gegen die Anlagefläche 134 spannen und damit die Membran 130 zwischen der Anlagefläche 134 und dem Membranhaltestück 132 dicht abschliessend einklemmen. Um einen Stromfluss zwischen den Elektroden 122 durch die Messzelle 32 hindurch zu ermöglichen, weisen die Membranhaltestücke 132 noch einen Durchtrittskanal 144 auf, der mit der Innenbohrung der Hohlschraube 142 und der Hülse 138 fluchtet. Damit eine Pufferlösung in den Durchtrittskanal eintreten kann, sind in der Hülse 138 und dem Membranhaltestück Durchtrittsöffnungen 146 ausgebildet. Sie ermöglichen gleichzeitig das Austreten von Luft, die in den Hohlräumen noch eingeschlossen ist. Das Verdrehen der Hohlschraube 142 kann mit Hilfe eines Stiftes erfolgen, der in radiale Bohrungen 148 in der Hohlschraube eingesteckt wird.

Der wesentliche Vorteil der erfindungsgemässen Anordnung liegt darin, dass der Probeninhalt ausgetauscht werden kann, ohne dass dadurch die Pufferlösung in den Kammern 94 und 96 betroffen wird. Es kann sogar der Zellenhalter 102 aus der Aufnahmebohrung 100 herausgedrückt werden, ohne dass Pufferflüssigkeit in die Aufnahmebohrung gerät. Dadurch kann ein rascher Probenwechsel vollzogen werden, was die Durchführung grösserer Messreihen erheblich beschleunigt.

Das Gehäuse ist vorzugsweise aus Acrylglas hergestellt. Der Zellenhalter 102 und das Membranhaltestück 132 bestehen vorzugsweise aus Poly-Tetrafluoräthylen wegen der guten Gleit- und Dichteigenschaften dieses Materials. Bei der Messzelle handelt es sich um eine Glaskapillare von beispielsweise 0,8 mm Innendurchmesser, die auf ihrem Innenumfang mit einer z.B. aus einem Hydrogel bestehenden Beschichtung zur Abschirmung der Ladungen der Glaswand versehen ist, um das Auftreten von Elektroosmose zu verhindern. Die Elektroden können beispielsweise von einem Silber/Silberchlorid-Elektrodenpaar oder Platin/Platin-Elektrodenpaar gebildet sein.

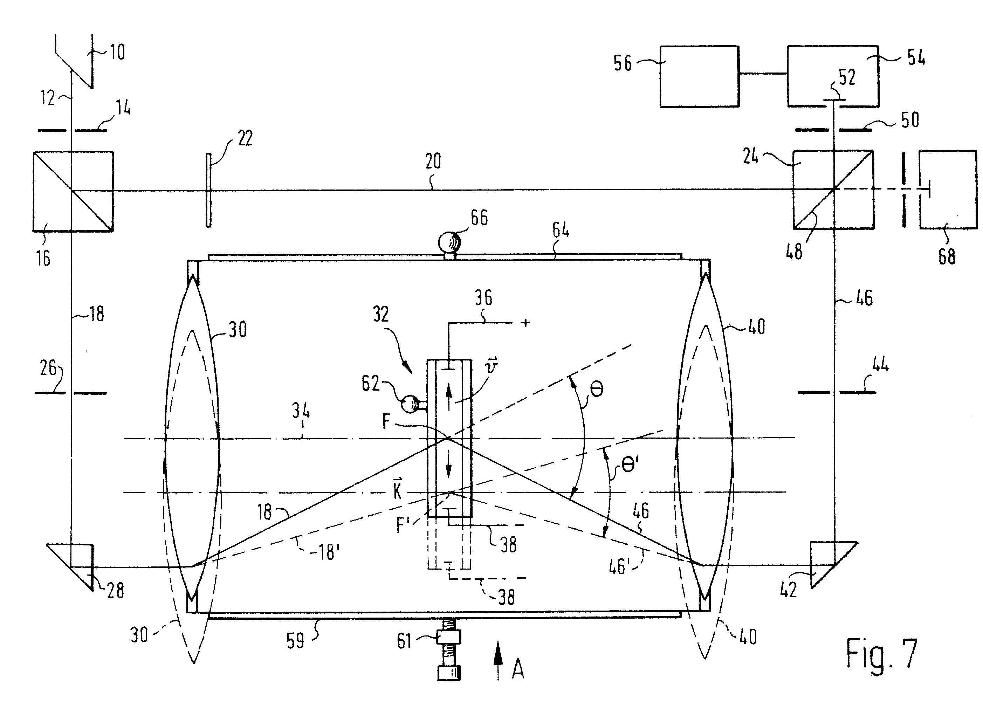

In der Fig. 7 ist eine abgewandelte Ausführungsform der in Fig. 1 dargestellten Messvorrichtung gezeigt. Gleiche Teile sind mit gleichen Bezugsziffern versehen. Der Unterschied zu der Ausführungsform gemäss Fig. 1 besteht darin, dass bei der in Fig. 7 dargestellten Ausführungsform die Prismen 28 und 42 feststehend montiert sind, während die Linsen 30 und 40 zusammen mit der Messzelle 32 gemeinsam auf einem Schlitten 59 montiert sind, der mittels eines Feintriebes 61 parallel zur Richtung der Teilstrahlen 18 und 46 verstellbar ist. Durch eine Verschiebung der Linsen 30 und 40 sowie der Messzelle 32 aus der mit ausgezogenen Linien angedeuteten Stellung in die durch gestrichelte Linien wiedergegebene Stellung fällt anstelle des Strahles 46 mit dem Streuwinkel $\theta$ ein Strahl 46' mit dem Streuwinkel $\theta'$ in das Prisma 42. Diese Anordnung hat den Vorteil, dass der die Linsen und die Messzelle tragende Schlitten 59 kleiner ist als der Schlitten 58, der die Prismen und 42 trägt (Fig. 1).

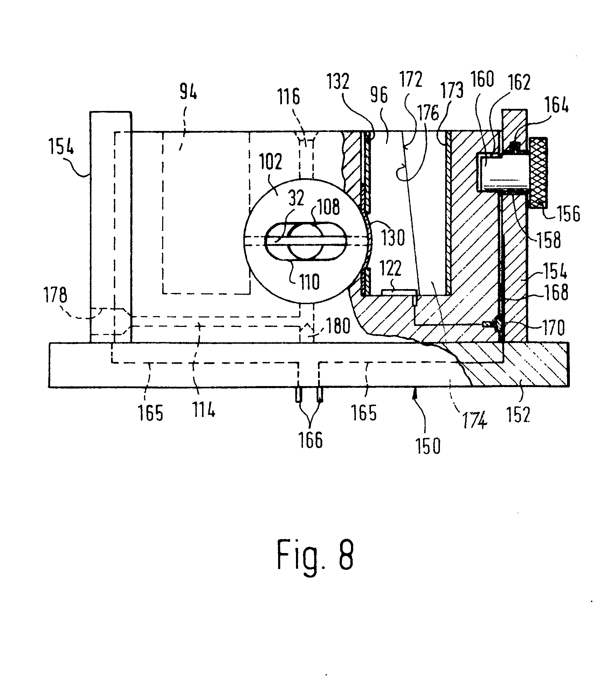

Fig. 8 zeigt eine abgewandelte Ausführungsform der Messzellenanordnung in einer teilweise schematischen, zum Teil geschnittenen Seitenansicht, wobei gleiche Teile wiederum mit gleichen Bezugsziffern versehen sind.

Bei der Messzellananordnung gemäss Fig. 8 sitzt das blockförmige Gehäuse in einem allgemein mit 150 bezeichneten Gehäusehalter, der eine Grundplatte 152 und zwei Seitenführungen 154 aufweist. Die Grundplatte 152 wird beispielsweise auf dem Tisch 64 der in den Fig. 1 und 7 dargestellten Messanordnung befestigt. Die Seitenführungen 154 besitzen – in einem horizontalen Schnitt betrachtet – ein im wesentlichen C-förmiges Profil, wobei der Abstand zwischen den C-Schenkeln gleich der Breite des blockförmigen Gehäuses ist, so dass dieses von oben her zwischen die Seitenführungen 154 wie zwischen zwei Schienen eingeschoben werden kann und zwischen den beiden Seitenführungen 154 in horizontaler Richtung unverrückbar festsitzt. Zur Arretierung des Gehäuses gegenüber einer vertikalen Bewegung dient ein Arretierbolzen 156, der die in Fig. 8 rechte Seitenführung 154 in einer Bohrung 158 durchsetzt und mit seinem freien Ende 160 in eine im wesentlichen kreisförmige Aussparung 162 in der der Seitenführung 154 zugekehrten Seitenwand des Gehäuses 92 eingreift. Der Arretierbolzen 156 kann in der in der Fig. 8 dargestellten Stellung mit Hilfe eines Sicherungsstiftes 164 nach Art eines Bajonettverschlusses festgelegt werden. Durch eine Drehung um einen bestimmten Winkelbetrag kommt der Sicherungsstift 164 frei, wonach der Arretierbolzen 156 mit seinem freien Ende 160 aus der Aussparung 162 herausgezogen werden kann. Um das Gehäuse 92 in dem Gehäusehalter 150 fest einzuspannen, ist das freie Ende 160 des Arretierbolzens 156 exzentrisch zur Bolzenachse ausgebildet, wobei die Lage des Exzenters so gewählt ist, dass er beim Arretieren des Arretierbolzens 156 an dem unteren Wandabschnitt der Aussparung 162 zur Anlage kommt und das Gehäuse 92 dadurch gegen die Grundplatte 152 spannt.

In die Grundplatte 152 sind Zuleitungen 165 eingelassen, welche Anschlusskontakte 166 an der Unterseite der Grundplatte 152 mit Gleitkontakten 168 verbinden, die jeweils an der Innenseite der Seitenführungen 154 angeordnet sind. In den den Seitenführungen 154 zugekehrten Seitenflächen des Gehäuses 92 ist jeweils ein Kontaktstift 170 angeordnet, der mit der in die jeweilige Pufferkammer 94 bzw. 96 hineinragenden Elektrode 122 verbunden ist. Die Pufferkammer 94 bzw. 96 ist jeweils zylindrisch ausgebildet. Das Membranhaltestück 132 ist von einem Halbzylinder gebildet, dessen Kantflächen 172 schräg zur Zylinderachse verlaufen. Das Membranhaltestück 132 wird mit Hilfe eines halbzylindrischen Klemmstückes 174 gegen die Wand der Pufferkammer 94 bzw. 96 angedrückt, dessen Kantflächen 176 komplementär zu den Kantflächen 172 des Membranhaltestückes 132 verlaufen. Beim Einführen des Klemmstückes 174 in die Pufferkammer 96 wird durch die Keilwirkung der schräg verlaufenden Kantflächen 172 und 176 das Membranhaltestück 132 gegen die Membran gepresst.

Bei der Messzellenanordnung gemäss Fig. 8 mündet der Einlasskanal 114 an einer Querseite des Gehäuseblocks 92, wobei eine mit der Mündung des Einlasskanals 114 fluchtende Bohrung 178 in der Seitenführung 154 vorgesehen ist, so dass beispielsweise eine Spritze mit dem zu untersuchenden Material in den Einlasskanal 114 eingeführt werden kann. An der Biegung zwischen dem in der Fig. 8 erkennbaren senkrecht verlaufenden Abschnitt und dem horizontal verlaufenden Abschnitt des Einlasskanals 114 befindet sich eine Reinigungsöffnung, die durch einen einschraubbaren Verschlussstopfen 180 verschlossen ist.

Die Funktionsweise der in Fig. 8 dargestellten Messzellenanordnung entspricht im übrigen der Funktionsweise der in den Fig. 5 und 6 dargestellten Messzellenanordnung.

**Patentansprüche**

1. Vorrichtung zur spektroskopischen Bestimmung der Geschwindigkeit von in einer Flüssigkeit bewegten Teilchen aus der Dopplerverschiebung der Frequenz einer an den bewegten Teilchen gestreuten elektromagnetischen Welle, umfassend eine Strahlungsquelle (10) zur Erzeugung einer im wesentlichen monochromatischen kohärenten elektromagnetischen Strahlung, eine Messzelle (32) zur Aufnahme einer die Flüssigkeit mit den Teilchen umfassenden Probe, einen Strahlteiler (16) zum Aufspalten der erzeugten Strahlung in einen die Messzelle (32) durchdringenden Messstrahl (18) und einen Referenzstrahl (20), einen Strahlmischer (24) zum Vereinigen des Referenzstrahls (20) mit dem aus der Messzelle (32) austretenden Messstrahl (46), eine Empfangsvorrichtung (54) zum Empfang des gemischten Strahles und eine Auswertevorrichtung (56) zur Verarbeitung der von der Empfangsvorrichtung (54) erzeugten Signale, dadurch gekennzeichnet, dass im Strahlengang zwischen Messzelle (32) und Strahlmischer (24) eine Sammellinse (40) so angeordnet ist, dass ihr Brennpunkt (F) innerhalb der Messzelle (32) liegt, dass eine Blendeneinrichtung (42, 44) zum Ausblenden eines beliebigen mit dem Referenzstrahl zu vereinigenden Teilstrahles (46) aus dem die Sammellinse (40) verlassenden, parallel zur optischen Achse der Sammellinse (40) gerichteten Strahlenbündel vorgesehen ist, dass die Blendeneinrichtung eingangsseitig ein Strahlumlenkelement (42) zur 90°-Ablenkung des von der Blendeneinrichtung erfassten Teilstrahles (46) aufweist und dass die Sammellinse (40) und die Messzelle (32) einerseits und das Strahlumlenkelement (42) anderseits senkrecht zur optischen Achse der Sammellinse und parallel zu dem umgelenkten Teilstrahl (46) relativ zueinander verstellbar sind.

2. Vorrichtung nach Anspruch 1, dadurch gekennzeichnet, dass die Blendeneinrichtung eine Lochblende (44) umfasst, die im Weg des umgelenkten Teilstrahles (46) angeordnet ist.

3. Vorrichtung nach Anspruch 1 oder 2, dadurch gekennzeichnet, dass im Strahlenweg zwischen dem Strahlteiler (16) und der Messzelle (32) eine zweite Sammellinse (30) so angeordnet ist, dass ihr Brennpunkt (F) innerhalb der Messzelle (32) liegt.

4. Vorrichtung nach Anspruch 3, dadurch gekennzeichnet, dass im Strahlenweg zwischen dem Strahlteiler (16) und der zweiten Sammellinse (30) eine zweite Blendeneinrichtung (26, 28) vorgesehen ist und dass ein Strahlaustrittselement (28) der zweiten Blendeneinrichtung und die zweite Sammellinse (30) relativ zueinander verstellbar sind.

5. Vorrichtung nach Anspruch 4, dadurch gekennzeichnet, dass die beiden Sammellinsen (30, 40) und die beiden Blendeneinrichtungen (44, 42; 26, 28) identisch ausgebildet und spiegelsymmetrisch bezüglich einer Mittelebene angeordnet sind, die senkrecht zu den optischen Achsen (34) der Sammellinsen (30, 40) durch die Messzelle (32) verläuft.

6. Vorrichtung nach Anspruch 5, dadurch gekennzeichnet, dass die beiden Strahlumlenkelemente (28, 42) der beiden Blendeneinrichtungen (44, 42; 26, 28) über eine gemeinsame Verstelleinrichtung (60) verstellbar sind.

7. Vorrichtung nach Anspruch 6, dadurch gekennzeichnet, dass die Verstelleinrichtung einen die Strahlumlenkelemente tragenden Schlitten (58) umfasst, der mittels eines Feintriebes (60) verstellbar ist.

8. Vorrichtung nach Anspruch 5, dadurch gekennzeichnet, dass die Sammellinsen (30, 40) und die Messzelle (32) gemeinsam im wesentlichen senkrecht zu der ersten Verstelleinrichtung gegenüber den Blendeneinrichtungen (44, 42; 26, 28) verstellbar sind.

9. Vorrichtung nach Anspruch 5, dadurch gekennzeichnet, dass die Messzelle (32) zylindrisch ausgebildet und so angeordnet ist, dass die Zylinderachse horizontal und senkrecht zu der ebenfalls horizontal gerichteten optischen Achse (34) der Sammellinsen (30, 40) verläuft und dass die Messzelle (32) gegenüber den Sammellinsen (30, 40) vertikal verstellbar ist.

10. Vorrichtung zur spektroskopischen Bestimmung der Geschwindigkeit von in einer Flüssigkeit bewegten Teilchen aus der Dopplerverschiebung der Frequenz einer an den bewegten Teilchen gestreuten elektromagnetischen Welle, umfassend eine Strahlungsquelle (10) zur Erzeugung einer im wesentlichen monochromatischen kohärenten elektromagnetischen Strahlung, eine Messzelle (32) zur Aufnahme einer die Flüssigkeit mit den Teilchen umfassenden Probe, einen Strahlteiler (16) zum Aufspalten der erzeugten Strahlung in einen die Messzelle (32) durchdringenden Messstrahl (18) und einen Referenzstrahl (20), einen Strahlmischer zum Vereinigen des Referenzstrahles (20) mit dem aus der Messzelle (32) austretenden Messstrahl (46), eine Empfangsvorrichtung (54) zum Empfang des gemischten Strahles und eine Auswertevorrichtung (56) zur Verarbeitung der von der Empfangsvorrichtung (54) erzeugten Signale, dadurch gekennzeichnet, dass der Strahlmischer (24) und die Empfangsanordnung (54) auf einem um eine durch die Messzelle (32) verlaufende Schwenkachse (86) schwenkbaren Schwenkträger (74) angeordnet sind.

11. Vorrichtung nach Anspruch 10, dadurch gekennzeichnet, dass der Referenzstrahl (20) auf mindestens einem Teil seines Weges über einen flexiblen Wellenleiter geführt ist.

12. Vorrichtung nach Anspruch 11, dadurch gekennzeichnet, dass der Wellenleiter von einer Monomode-Lichtleitfaser gebildet ist, in die der Referenzstrahl mittels eines optischen Systems fokussierbar ist.

13. Vorrichtung nach Anspruch 11 oder 12, dadurch gekennzeichnet, dass die Länge des Wellenleiters so gewählt ist, dass die Gesamtlänge des Referenzstrahles gleich der Gesamtlänge des Messstrahles ist.

14. Vorrichtung nach Anspruch 10, dadurch gekennzeichnet, dass der Referenzstrahl (20) und der Messstrahl (18) beiderseits der Messzelle (32) jeweils gemeinsam in einer die Schwenkachse (86) enthaltenden Ebene verlaufen und dass im Schnittpunkt des Referenzstrahles (20) mit der Schwenkachse (86) ein Streuelement (90) angeordnet ist, das den Referenzstrahl (20) in einer zur Schwenkachse (86) im wesentlichen senkrechten Ebene mindestens über den Schwenkbereich der Empfangsanordnung streut.

15. Vorrichtung nach Anspruch 14, dadurch gekennzeichnet, dass das Streuelement (90) von einer zylindrischen Glaskapillare gebildet ist, die koaxial zur Schwenkachse (86) angeordnet ist.

16. Vorrichtung nach Anspruch 14, dadurch gekennzeichnet, dass das Streuelement von der Spitze einer koaxial zur Schwenkachse angeordneten Nadel gebildet ist.

17. Vorrichtung nach einem der Ansprüche 14 bis 16, dadurch gekennzeichnet, dass der Messstrahl (18) vom Strahlteiler (16) durch die Messzelle (32) über ein erstes Umlenkelement (85) zum Strahlmischer (24) und der Referenzstrahl (20) vom Strahlteiler (16) über ein zweites Umlenkelement (82) und das Streuelement (90) zum Strahlmischer (24) geführt ist.

18. Vorrichtung nach einem der Ansprüche 10 bis 17, dadurch gekennzeichnet, dass die Messzelle (32) um die Schwenkachse (86) drehbar ist.

19. Vorrichtung nach einem der Ansprüche 10 bis 18, dadurch gekennzeichnet, dass der Schwenkträger von einer Drehscheibe (74) gebildet ist, die auf einem die Strahlungsquelle (10), den Strahlteiler (16) und die Messzelle (32) tragenden Tisch (70, 72) drehbar gelagert ist und dass eine Winkelmessvorrichtung zur Bestimmung des Drehwinkels der Drehscheibe (74) vorgesehen ist.

20. Vorrichtung nach einem der Ansprüche 1 bis 19, dadurch gekennzeichnet, dass im Referenzstrahl (20) eine Einrichtung (83) zur Einstellung der Intensität des Referenzstrahles angeordnet ist.

21. Vorrichtung insbesondere nach einem der Ansprüche 1 bis 20, dadurch gekennzeichnet, dass die Messzelle (32) von einem beidendig offenen Rohr gebildet und in einem einen Durchtrittskanal (106) für den Messstrahl aufweisenden Zellenhalter (102) angeordnet ist, der in einem Gehäuse (92) zwischen einer Füll- und Reinigungsstellung, in welcher die beiden Rohrenden mit einer Einfüllöffnung (114) und einer Auslauföffnung (116) im Gehäuse (92) fluchten, und einer Messstellung verstellbar ist, in welcher die Verbindung zwischen der Messzelle (32) und der Aussenluft unterbrochen ist.

22. Vorrichtung nach Anspruch 21, dadurch gekennzeichnet, dass der Zellenhalter (102) von einem zylindrischen Körper gebildet ist, der eine diametral verlaufende Durchbrechung (106) zur Aufnahme der Messzelle (32) und einen axial verlaufenden Durchtrittskanal (108, 110) für den Messstrahl aufweist und dass das Gehäuse (92) einen Block (98) mit einer durchgehenden zylindrischen Aufnahmebohrung (100) mit einem dem Aussendurchmesser des Zellenhalters (102) entsprechenden Innendurchmesser aufweist, wobei die Einfüllöffnung (114) und die Auslassöffnung (116) als einander diametral gegenüberliegende Bohrungen in dem Block (98) ausgebildet sind.

23. Vorrichtung nach Anspruch 22, dadurch gekennzeichnet, dass das Gehäuse (92) beidseits des Blockes (98) und bezüglich der Achse der Aufnahmebohrung (100) einander diametral gegenüberliegend jeweils eine Kammer (94, 96) zur Aufnahme einer Pufferlösung und einer Elektrode (122) aufweist, dass die Aufnahmebohrung (100) für den Zellenhalter (102) mit den beiden Kammern (94, 96) über einander diametral gegenüberliegende Öffnungen (128) in dem Block (98) verbunden ist, die gegenüber der Einfüllöffnung (114) und der Auslauföffnung (116) in Umfangsrichtung versetzt sind und dass die Öffnungen (128) jeweils durch eine einen Ladungstransport zwischen den Kammern (94, 96) und der Messzelle (32) zulassende Membran (130) verschliessbar sind.

24. Vorrichtung nach Anspruch 23, dadurch gekennzeichnet, dass an der der jeweiligen Kammer (94, 96) zugewandten Blockfläche im Bereich der Öffnung (128) eine zylindrische Anlagefläche (134) für die Membran (130) ausgebildet ist, deren Mantellinien senkrecht zur Zylinderachse der Aufnahmebohrungen (100) verlaufen und welche die zylindrische Bohrungswand schneidet, und dass jeweils ein teilzylindrisches Membranhaltestück (132) mit einer der Anlagefläche (134) angepassten zylindrischen Klemmfläche und einem mit der jeweiligen Öffnung (128) fluchtenden Durchlasskanal (144) vorgesehen ist, das mittels einer Spannvorrichtung (138, 142) gegen die Anlagefläche (134) anpressbar ist.

25. Vorrichtung nach Anspruch 24, dadurch gekennzeichnet, dass die Spannvorrichtung (138, 142) eine mit Innengewinde versehene Hülse (138) und eine mit einer axialen Bohrung versehene, in das Innengewinde (140) einschraubbare Hohlschraube (142) aufweist und dass sich die Spannvorrichtung (138, 142) einerseits an dem Membranhaltestück (132) und anderseits an der der Anlagefläche (134) gegenüberliegenden Kammerwand abstützt.

26. Vorrichtung nach einem der Ansprüche 23 bis 25, dadurch gekennzeichnet, dass die Elektroden (122) an lösbar mit dem Gehäuse (92) verbindbaren Elektrodenhaltern (120) angeordnet sind.

27. Vorrichtung nach Anspruch 26, dadurch gekennzeichnet, dass die Elektrodenhalter (120) jeweils in eine die Gehäusewand durchsetzende Gewindebohrung (118) einschraubbar sind und an ihrem kammerseitigen inneren Ende die jeweilige Elektrode (122) tragen, die mit einer Anschlussklemme (124) an einem ausserhalb der jeweiligen Kammer liegenden Abschnitt des Elektrodenhalters (120) elektrisch leitend verbunden ist.

28. Vorrichtung nach einem der Ansprüche 21 bis 27, dadurch gekennzeichnet, dass die Messzelle (32) von einer Glaskapillare gebildet ist.

29. Vorrichtung nach einem der Ansprüche 22 bis 28, dadurch gekennzeichnet, dass die Innenabmessungen der Durchbrechung (106) zur Aufnahme der Messzelle (32) geringfügig kleiner als der Aussendurchmesser der Messzelle (32) sind.

## Claims

1. An apparatus for the spectroscopic determination of the speed of particles moving in a liquid on the basis of the Doppler shift of the frequency of an electromagnetic wave scattered on the moving particles, the apparatus comprising a radiation source (10) for generating substantially monochromatic, coherent, electromagnetic radiation, a measuring cell (32), which includes the liquid containing the particles, for receiving a sample, a beam divider (16) for separating the generated radiation into a measuring beam (18), which passes through the measuring cell (32), and a reference beam (20), a beam mixer (24) for combining the reference beam (20) with the measuring beam (46) emerging from the measuring cell (32), a receiver means (54) for receiving the mixed beam, and an analysing means (56) for processing the signals produced by the receiver means (54), characterised in that a convergent lens (40) is disposed in the beam path between the measuring cell (32) and the beam mixer (24) in such a manner that its focal point (F) is situated inside the measuring cell (32), that a diaphragm mechanism (42, 44) is provided in order to screen any desired partial beam (46), to be combined with the reference beam, from the bundle of beams which leave the convergent lens (40) and extend parallel to the optical axis of the convergent lens (40), that the diaphragm mechanism is provided, at its input end, with a beam deflection element (42) for the 90° deflection of the partial beam (46) collected by the diaphragm mechanism, and that the convergent lens (40) and the measuring cell (32), on the one hand, and the beam deflection element (42), on the other hand, are adjustable relative to one another perpendicular to the optical axis of the convergent lens and parallel to the deflected partial beam (46).

2. An apparatus as claimed in claim 1, characterised in that the diaphragm mechanism has a perforate screen (44) disposed in the path of the deflected partial beam (46).

3. An apparatus as claimed in claim 1 or 2, characterised in that a second convergent lens (30) is disposed in the beam path between the beam divider (16) and the measuring cell (32) in such a manner that its focal point (F) is situated inside the measuring cell (32).

4. An apparatus as claimed in claim 3, characterised in that a second diaphragm mechanism (26, 28) is provided in the beam path between the beam divider (16) and the second convergent lens (30), and a beam deflection element (28) of the second diaphragm mechanism and the second convergent lens (30) are adjustable relative to one another.

5. An apparatus as claimed in claim 4, characterised in that the two convergent lenses (30, 40) and the two diaphragm mechanisms (44, 42; 26, 28) are identical and are disposed in mirror-symmetrical fashion relative to a central plane extending through the measuring cell (32) perpendicularly to the optical axes (34) of the convergent lenses (30, 40).

6. An apparatus as claimed in claim 5, characterised in that the two beam deflection elements (28, 42) of the two diaphragm mechanisms (44, 42; 26, 28) are adjustable by means of a common adjusting mechanism (60).

7. An apparatus as claimed in claim 6, characterised in that the adjusting mechanism comprises a slide member (58) which carries the beam deflection elements and is adjustable by means of a precision setting device (60).

8. An apparatus as claimed in claim 5, characterised in that the convergent lenses (30, 40) and the measuring cell (32) are jointly adjustable substantially perpendicular to the first adjustment direction relative to the diaphragm mechanisms (44, 42; 26, 28).

9. An apparatus as claimed in claim 5, characterised in that the measuring cell (32) is cylindrical and is arranged in such a manner that the axis of the cylinder extends horizontally and perpendicularly relative to the optical axes (34) of the convergent lenses (30, 40), the optical axes (34) likewise extending horizontally, and that the measuring cell (32) is vertically adjustable relative to the convergent lenses (30, 40).

10. An apparatus for the spectroscopic determination of the speed of particles moving in a liquid on the basis of the Doppler shift of the frequency of an electromagnetic wave scattered on moving particles, the apparatus comprising a radiation source (10) for generating substantially monochromatic, coherent, electromagnetic radiation, a measuring cell (32), which includes the liquid containing the particles, for receiving a sample, a beam divider (16) for separating the generated radiation into a measuring beam (18), which passes through the measuring cell (32), and a reference beam (20), a beam mixer for combining the reference beam (20) with the measuring beam (46) emerging from the measuring cell (32), a receiver means (54) for receiving the mixed beam, and an analysing means (56) for processing the signals produced by the receiver means (54), characterised in that the beam mixer (24) and the receiver arrangement (54) are disposed on a pivotal carrier (74) which is pivotal about a pivotal axis (86) extending through the measuring cell (32).

11. An apparatus as claimed in claim 10, characterised in that the reference beam (20) is guided by a flexible wave guide over at least a portion of its path.

12. An apparatus as claimed in claim 11, characterised in that the wave guide is formed by a monomode light conductive fibre, into which the reference beam is capable of being focussed by means of an optical system.

13. An apparatus as claimed in claim 11 or 12, characterised in that the length of the wave guide is so selected that the overall length of the reference beam is identical to the total length of the measuring beam.

14. An apparatus as claimed in claim 10, characterised in that the reference beam (20) and the measuring beam (18) jointly extend, on both sides of the measuring cell (32), in a plane containing the pivotal axis (86), and that a scattering element (90) is disposed at the point of intersection between the reference beam (20) and the pivotal axis (86), the scattering element (90) scattering the reference beam (20) at least over the pivotal region of the receiver arrangement in a plane which extends substantially perpendicularly relative to the pivotal axis (86).

15. An apparatus as claimed in claim 14, characterised in that the scattering element (90) is formed by a cylindrical glass capillary tube disposed coaxially with the pivotal axis (86).

16. An apparatus as claimed in claim 14, characterised in that the scattering element is formed by the point of a needle disposed coaxially with the pivotal axis.

17. An apparatus as claimed in one of claims 14 to 16, characterised in that the measuring beam (18) is conducted from the beam divider (16) through the measuring cell (32) via a first deflection element (85) to the beam mixer (24), and the reference beam (20) is conducted from the beam divider (16) to the beam mixer (24) via a second deflection element (82) and the scattering element (90).

18. An apparatus as claimed in one of claims 10 to 17, characterised in that the measuring cell (32) is rotatable about the pivotal axis (86).

19. An apparatus as claimed in one of claims 10 to 18, characterised in that the pivotal carrier is formed by a rotary disc (74) which is rotatably mounted on a table (70, 72) carrying the radiation source (10), the beam divider (16) and the measuring cell (32), and that an angle measuring means is provided in order to determine the angle of rotation of the rotary disc (74).

20. An apparatus as claimed in one of claims 1 to 19, characterised in that a mechanism (83) for adjusting the intensity of the reference beam is disposed in the reference beam (20).

21. An apparatus more especially as claimed in one of claims 1 to 20, characterised in that the measuring cell (32) is formed by an open-ended tube and is disposed in a cell holder (102) which comprises a through-channel (106) for the measuring beam and is adjustable in a housing (92) between a filling and cleaning position, in which the two ends of the tube are aligned with an inlet aperture (114) and an outlet aperture (116) formed in the housing (92), and a measuring position in which the connection between the measuring cell (32) and the outside air is interrupted.

22. An apparatus as claimed in claim 21, characterised in that the cell holder (102) is formed by a cylindrical body having a diametrically extending opening (106) formed therein for receiving the measuring cell (32) and an axially extending through-channel (108, 110) for the measuring beam, and that the housing (92) is provided with a block (98) having a continuous cylindrical receiver bore (100) formed therein, such bore (100) having an internal diameter corresponding to the external diameter of the cell holder (102), the inlet aperture (114) and the outlet aperture (116) being provided in the block (98) as diametrically opposed bores.

23. An apparatus as claimed in claim 22, characterised in that the housing (92) has a chamber (94, 96) on each side of the block (98), such chambers (94, 96) being diametrically opposed to one another relative to the axis of the receiver bore (100) and being provided in order to receive a buffer solution and an electrode (122), that the receiver bore (100) for the cell holder (102) is connected to the two chambers (94, 96) via diametrically opposed apertures (128) which are formed in the block (98) and are offset in the circumferential direction relative to the inlet aperture (114) and the outlet aperture (116), and that each of the apertures (128) is sealable by means of a respective membrane (130) which permits charges to be transported between the chambers (94, 96) and the measuring cell (32).

24. An apparatus as claimed in claim 23, characterised in that a cylindrical contact surface (134) for the membrane (130) is provided on the block surface, which faces towards the respective chamber (94, 96), in the region of the aperture (128), the gereratrix of the contact surface (134) for the diaphragm (130) extending perpendicularly to the cylindrical axes of the receiver bores (100) and being intersected by the cylindrical bore wall, and that a partially cylindrical membrane retaining member (132) is provided with a cylindrical clamping surface, which corresponds to the contact surface (134), and a through-channel (144), which is aligned with the respective aperture (128) and can be pressed against the contact surface (134) by means of a clamping device (138, 142).

25. An apparatus as claimed in claim 24, characterised in that the clamping device (138, 142) has a sleeve (138), which is provided with an internal thread, and a hollow screw (142) which is provided with an axial bore and is capable of being screwed into the internal thread (140), and that the clamping device (138, 142) is supported, on the one hand, on the membrane retaining member (132) and, on the other hand, on the chamber wall lying opposite the contact surface (134).

26. An apparatus as claimed in one of claims 23 to 25, characterised in that the electrodes (122) are mounted on electrode holders (120) which are detachably connectable to the housing (92).

27. An apparatus as claimed in claim 26, characterised in that each of the electrode holders (120) can be screwed into a respective threaded bore (118), which extends through the housing wall, and carries, on its inner end at the chamber end, the respective electrode (122) which is electrically conductively connected to a terminal (124) on a portion of the electrode holder (120) situated externally of the respective chamber.

28. An apparatus as claimed in one of claims 21 to 27, characterised in that the measuring cell (32) is formed by a glass capillary tube.

29. An apparatus as claimed in one of claims 22 to 28, characterised in that the internal dimensions of the opening (106) for receiving the measuring cell (32) are slightly smaller than the external diameter of the measuring cell (32).

## Revendications

1. Dispositif pour la détermination spectroscopique de la vitesse de particules en mouvement dans un liquide à partir du déplacement Doppler de la fréquence d'une onde électromagnétique dirigée sur les particules en mouvement, comprenant une source de radiation (10) pour émettre un faisceau électromagnétique cohérent essentiellement monochromatique, une cellule de mesure (32) dans laquelle se trouve une éprouvette contenant le liquide avec les particules, un diviseur de faisceau (16) pour séparer le faisceau émis en un faisceau de mesure (18) traversant la cellule de mesure (32) et un faisceau de référence (20), un mélangeur de faisceaux (24) pour réunir le faisceau de référence (20) et le faisceau de mesure (46) sortant de la cellule de mesure (32), un dispositif de réception (54) pour recevoir les faisceaux réunis et un dispositif d'exploitation (56) pour traiter les signaux fournis par le dispositif de réception (54), caractérisé en ce que, sur le parcours du faisceau entre la cellule de mesure (32) et le mélangeur de faisceaux (24), une lentille convergente (40) est disposée de telle sorte que son foyer (F) se trouve à l'intérieur de la cellule de mesure (32), et il est prévu un diaphragme (42, 44) pour séparer du faisceau venant de la lentille convergente (40) un rayon partiel (46) quelconque dirigé parallèlement à l'axe optique de cette lentille convergente (40) et destiné à être réuni au faisceau de référence, le diaphragme comprenant du côté de l'entrée un élément déviateur de rayon (42) déviant de 90° le rayon partiel (46) qu'il reçoit, la lentille convergente (40) et la cellule de mesure (32) d'une part, et l'élément déviateur de rayon (42) d'autre part étant réglables en position l'un par rapport à l'autre perpendiculairement à l'axe optique de la lentille convergente et parallèlement au rayon partiel (46) dévié.

2. Dispositif selon la revendication 1 caractérisé en ce que le diaphragme comprend un élément à trou (44) qui est disposé sur le parcours du rayon partiel (46) dévié.

3. Dispositif selon l'une quelconque des revendications 1, 2 caractérisé en ce que, sur le parcours du faisceau entre le diviseur de faisceau (16) et la cellule de mesure (32), une deuxième lentille convergente (30) est disposée de telle sorte que son foyer (F) se trouve à l'intérieur de la cellule de mesure (32).

4. Dispositif selon la revendication 3 caractérisé en ce qu'il est prévu un deuxième diaphragme (26, 28) sur le parcours du faisceau entre le diviseur de faisceau (16) et la deuxième lentille convergente (30), un élément déviateur de faisceau (28) faisant partie du deuxième diaphragme et la deuxième lentille convergente (30) étant réglables en position l'un par rapport à l'autre.

5. Dispositif selon la revendication 4 caractérisé en ce que les deux lentilles convergentes (30, 40) et les deux diaphragmes (44, 42; 26, 28) sont identiques et sont disposés symétriquement par rapport à un plan médian dirigé perpendiculairement aux axes optiques (34) des lentilles convergentes (30, 40) et passant par la cellule de mesure (32).

6. Dispositif selon la revendication 5 caractérisé en ce que les deux éléments déviateurs (28, 42) des deux diaphragmes (44, 42; 26, 28) sont réglables en position à l'aide d'un dispositif de réglage (60) commun.

7. Dispositif selon la revendication 6 caractérisé en ce que le dispositif de réglage comprend un chariot (58) portant les éléments déviateurs qui est déplaçable au moyen d'une commande micrométrique (60).

8. Dispositif selon la revendication 5 caractérisé en ce que les lentilles convergentes (30, 40) et la cellule de mesure (32) sont réglables en position ensemble par rapport aux diaphragmes (44, 42; 26, 28) par déplacement en sens sensiblement perpendiculaire au premier dispositif de réglage.

9. Dispositif selon la revendication 5 caractérisé en ce que la cellule de mesure (32) est cylindrique et disposée de sorte que son axe géométrique est dirigé horizontalement et perpendiculairement à l'axe optique (34) des lentilles convergentes (30, 40) dirigé lui aussi horizontalement, cette cellule de mesure (32) étant déplaçable verticalement par rapport aux lentilles convergentes (30, 40).

10. Dispositif pour la détermination spectroscopique de la vitesse de particules en mouvement dans un liquide à partir du déplacement Doppler de la fréquence d'une onde électromagnétique dirigée sur les particules en mouvement, comprenant une source de radiation (10) pour émettre un faisceau électromagnétique cohérent essentiellement monochromatique, une cellule de mesure (32) dans laquelle se trouve une éprouvette contenant le liquide avec les particules, un diviseur de faisceau (16) pour séparer le faisceau émis en un faisceau de mesure (18) traversant le cellule de mesure (32) et un faisceau de référence (20), un mélangeur de faisceaux pour réunir le faisceau de référence (20) et le faisceau de mesure (46) sortant de la cellule de mesure (32), un dispositif de réception (54) pour recevoir les faisceaux réunis et un dispositif d'exploitation (56) pour traiter les signaux fournis par le dispositif de réception (54), caractérisé en ce que le mélangeur de faisceaux (24) et le dispositif de réception (54) sont montés sur un support pivotant (74) qui pivote autour d'un axe de pivotement (86) passant à travers la cellule de mesure (32).

11. Dispositif selon la revendication 10 caractérisé en ce que le faisceau de référence (20) est guidé sur au moins une partie de son parcours au moyen d'un guide d'ondes souple.

12. Dispositif selon la revendication 11 caractérisé en ce que le guide d'ondes est constitué par une fibre optique monomode dans laquelle le faisceau de référence est focalisable à l'aide d'un moyen optique.

13. Dispositif selon l'une quelconque des revendications 11, 12 caractérisé en ce que la longueur du guide d'ondes est choisie telle que la longueur totale du faisceau de référence est égale à la longueur totale du faisceau de mesure.

14. Dispositif selon la revendication 10 caractérisé en ce que, des deux côtés de la cellule de mesure (32), le faisceau de référence (20) et le faisceau de mesure (18) se trouvent ensemble dans un plan contenant l'axe de pivotement (86) tandis qu'au point d'intersection du faisceau de référence (20) avec l'axe de pivotement (86) est disposé un élément de réfraction (90) qui réfracte le faisceau de référence (20) dans un plan sensiblement perpendiculaire à l'axe de pivotement (86) dans une zone au moins égale à la zone de pivotement du dispositif de réception.

15. Dispositif selon la revendication 14 caractérisé en ce que l'élément de réfraction (90) est constitué par un tube capillaire cylindrique en verre qui est disposé coaxialement à l'axe de pivotement (86).

16. Dispositif selon la revendication 14 caractérisé en ce que l'élément de réfraction est constitué par la pointe d'une aiguille disposée coaxialement à l'axe de pivotement.

17. Dispositif selon l'une quelconque des revendications 14 à 16 caractérisé en ce que le faisceau de mesure (18) est guidé depuis le diviseur de faisceau (16) jusqu'au mélangeur de faisceaux (24) en passant par la cellule de mesure (32) et un premier élément déviateur (85) tandis que le faisceau de référence (20) est guidé depuis le diviseur de faisceau (16) jusqu'au mélangeur de faisceaux (24) en passant par un deuxième élément déviateur (82) et par l'élément de réfraction (90).

18. Dispositif selon l'une quelconque des revendications 10 à 17 caractérisé en ce que la cellule de mesure (32) peut tourner autour de l'axe de pivotement (86).

19. Dispositif selon l'une quelconque des revendications 10 à 18 caractérisé en ce que le support pivotant est un disque rotatif (74) qui est monté tournant sur une table portant la source de radiation (10), le diviseur de faisceau (16) et la cellule de mesure (32), et il est prévu un dispositif goniométrique pour déterminer l'angle de rotation du disque tournant (74).

20. Dispositif selon l'une quelconque des revendications 1 à 19 caractérisé en ce qu'un dispositif (83) de réglage de l'intensité du faisceau de référence est disposé sur le trajet de ce dernier.

21. Dispositif en particulier selon l'une quelconque des revendications 1 à 20 caractérisé en ce que la cellule de mesure (32) est un tube ouvert aux deux extrémités disposé dans un support de cellule (102) ayant un canal de passage (106) du faisceau de mesure, ce tube pouvant être déplacé dans un boîtier (92) entre une position de remplissage et de nettoyage dans laquelle les deux extrémités de tube sont dans l'alignement d'une ouverture de remplissage (114) et d'une ouverture de sortie (116) ménagées dans le boîtier (92), et une position de mesure dans laquelle la communication entre la cellule de mesure (32) et l'air extérieur est interrompue.

22. Dispositif selon la revendication 21 caractérisé en ce que le support de cellule (102) est un corps cylindrique présentant un évidement (106) dirigé diamétralement destiné à recevoir la cellule de mesure (32) avec un canal de passage (108, 110) axial pour le faisceau de mesure, et le boîtier (92) comprend un bloc (98) percé de part en part par un logement (100) cylindrique dont le diamètre intérieur correspond au diamètre extérieur du support de cellule (102), l'ouverture de remplissage (114) et l'ouverture de sortie (116) se présentant comme des trous diamétralement opposés percés dans ce bloc (98).

23. Dispositif selon la revendication 22 caractérisé en ce que le boîtier (92) contient deux chambres (94, 96) destinées à recevoir chacune une solution tampon et une électrode (122), situées respectivement d'un côté et de l'autre du bloc (98) et diamétralement opposées l'une à l'autre par rapport à l'axe du logement (100), ce logement (100) pour le support de cellule (102) étant relié aux deux chambres (94, 96) par des ouvertures (128) diamétralement opposées prévues dans le bloc (98) et décalées en sens circonférentiel par rapport à l'ouverture de remplissage (114) et à l'ouverture de sortie (116), ces ouvertures (128) pouvant être fermées chacune par une membrane (130) permettant un transport de charge entre les chambres (94, 96) et la cellule de mesure (32).

24. Dispositif selon la revendication 23 caractérisé en ce que, sur la surface du bloc voisine de chaque chambre (94, 96), il est ménagé dans la zone de l'ouverture (128) une surface d'application (134) cylindrique de la membrane (130) dont les génératrices sont dirigées perpendiculairement à l'axe géométrique du logement (100), cette surface coupant la paroi cylindrique de ce logement cependant qu'il est prévu un élément de retenue de membrane (132) en segment de cylindre et à surface de serrage cylindrique adaptée à la surface d'application (134) avec un canal de passage (144) situé dans l'alignement de l'ouverture (128) intéressée, cet élément de retenue de membrane pouvant être pressé contre la surface d'application (134) au moyen d'un dispositif de serrage (138, 142).

25. Dispositif selon la revendication 24 caractérisé en ce que le dispositif de serrage (138, 142) comprend une douille filetée intérieurement (138) et une vis creuse (142) à trou axial pouvant être vissée dans le filetage intérieur (140) de la douille (138), ce dispositif de serrage (138, 142) s'appuyant d'un côté contre l'élément de retenue de membrane (132) et de l'autre côté contre la paroi de la chambre opposée à la surface d'application (134).

26. Dispositif selon l'une quelconque des revendications 23 à 25 caractérisé en ce que les électrodes (122) sont montées sur des porte-électrodes (120) pouvant être reliés de façon amovible au boîtier (92).

27. Dispositif selon la revendication 26 caractérisé en ce que les porte-électrodes (120) peuvent être vissés chacun dans un trou fileté (118) traversant la paroi de boîtier et portent à leur extrémité intérieure l'électrode (122) correspondante, qui est réunie électriquement avec une borne de raccordement (124) faisant partie du support d'électrode (120) se trouvant à l'extérieur de la chambre intéressée.

28. Dispositif selon l'une quelconque des revendications 21 à 27 caractérisé en ce que la cellule de mesure (32) est un tube capillaire en verre.

29. Dispositif selon l'une quelconque des revendications 22 à 28 caractérisé en ce que les dimensions intérieures de l'évidement (106) servant de logement à la cellule de mesure (32) sont légèrement inférieures au diamètre extérieur de la cellule de mesure (32).

Fig. 1

Fig. 2

0 012 396

Fig. 3

Fig. 4

Fig. 5

Fig. 6

Fig. 7

Fig. 8